Europäisches Patentamt

European Patent Office

Office européen des brevets

(19)

(11) **EP 1 105 770 B1**

(12) **EUROPEAN PATENT SPECIFICATION**

(45) Date of publication and mention
of the grant of the patent:
**14.12.2005 Bulletin 2005/50**

(51) Int Cl.⁷: **G02F 1/09**, G02B 27/28,
G02B 6/26

(21) Application number: **99942271.0**

(22) Date of filing: **17.08.1999**

(86) International application number:
**PCT/US1999/018739**

(87) International publication number:
**WO 2000/010053 (24.02.2000 Gazette 2000/08)**

(54) **COMPACT POLARIZATION INSENSITIVE CIRCULATORS WITH SIMPLIFIED STRUCTURE AND LOW POLARIZATION MODE DISPERSION**

KOMPAKTER, POLARISATIONSUNABHÄNGIGER ZIRKULATOR MIT VEREINFACHTEM AUFBAU UND GERINGER POLARISATIONSMODENDISPERSION

CIRCULATEURS COMPACTS INSENSIBLES A LA POLARISATION PRESENTANT UNE STRUCTURE SIMPLIFIEE ET UNE DISPERSION DE POLARISATION DE MODE FAIBLE

(84) Designated Contracting States:
**AT BE CH CY DE DK ES FI FR GB GR IE IT LI LU MC NL PT SE**

(30) Priority: **17.08.1998 US 135083**
**05.11.1998 US 186751**

(43) Date of publication of application:
**13.06.2001 Bulletin 2001/24**

(73) Proprietor: **FINISAR CORPORATION**
**Sunnyvale, CA 94089 (US)**

(72) Inventors:
• **XIE, Ping**
**San Jose, CA 95131 (US)**

• **HUANG, Yonglin**
**San Jose, CA 95131 (US)**

(74) Representative: **Finnie, Peter John et al**
**Gill Jennings & Every,**
**Broadgate House,**
**7 Eldon Street**
**London EC2M 7LH (GB)**

(56) References cited:
**EP-A- 0 576 072**        **EP-A- 0 814 361**
**WO-A-90/15357**        **WO-A-97/22034**
**US-A- 5 574 596**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Field of the Invention

The invention relates to optical devices; more particularly, it relates to optical circulators.

Description of Related Art

An optical circulator is a nonreciprocal, typically three-port or four-port, device. Light entering the first port passes out the second port, but light entering the second port can not pass back to first port. Instead, it passes out of the third port. By installing an optical circulator at each end of a fiber link, an existing unidirectional fiber optic communication link can be quickly and economically converted to a bi-directional one. Such a modification results in a doubled bit carrying capacity. An optical circulator can also be used in applications such as wavelength division multiplexer (WDM), Erbium-doped fiber amplifier (EDFA), add-drop multiplexers, dispersion compensators and optical time domain reflectometers (OTDR's).

Optical circulators are a key element in today's optical networks. However, it has not been widely adopted because of its high cost. A typical optical circulator usually comprises many optical elements and has a large optical footprint. Manufacturing of conventional optical circulators usually requires precise alignment of each optical element, leading to low yields and high production costs.

An early concept of a polarization independent optical circulator for telecommunication use was disclosed in Matsumoto, US Patent No. 4,272,159. Such circulators are widely used in conventional WDM optical networks.

Optical circulators have been described in patents, including the above-mentioned Matsumoto, U.S. Patent No. 4,272,159; Emkey, U.S. Patent No. 4,464,022; and Kuwahara, and U.S. Patent No. 4,650,289. However, these early optical circulators often suffer from high insertion loss and/or cross-talk that is unacceptably high for many communications applications. Insertion loss is defined as the difference between the power between light launched into the optical circulator and the power that exits the device. Insertion loss is largely due to coupling loss from fiber to fiber, absorption of light and to imperfect polarization separation. Cross-talk in an optical circulator refers to the amount of power emitted at port 3 (to the receiver) from light entering at port 1 (from the transmitter). The conventional polarizing cubes used in these prior optical circulators often cause large insertion loss and cross-talk because of its low polarization extinction ratio.

Recent circulators as described in Koga, U.S. Patent No. 5,204,771; and U.S. Patent No. 5,319,483 represent some improvement in either insertion loss or cross talk. The optical circulators of Koga involve a beam path determining means for introducing a beam to a different direction depending upon the direction of the electric field vector and the propagation. In the context of the Koga circulators, the different direction being referred to is really an example of beam shifting, rather than a change in propagation direction. The beam path determining means of Koga shift a beam such that it possesses the same propagation direction but is spatially located in a different portion of the circulator. In this sense, the input beam to and output beam from the beam path determining means are parallel in propagation direction but are shifted in spatial location. A disadvantage of the Koga circulators is that the construction of these circulators demands precise fabrication of birefringent crystals and precise matching waveplates. These types of circulators are therefore often difficult and costly to make. The size of these circulators is also excessively large.

Recent circulators disclosed in Cheng, U.S. Patent No. 5,471,340; and Cheng, U.S. Patent No. 5,574,596, appear to have low insertion loss and cross talk, and also to have a simplified structure compared to previous circulators. The Cheng patents disclose the use of beam path determining means of several long birefringent crystals to replace conventional polarizing cubes. The beam path determining means serve to shift the beams passing through, rather than changing the propagation direction. A disadvantage of the Cheng circulators is that long birefringent crystals are often difficult to fabricate. They are also quite expensive. Furthermore, the footprint of this type of circulator is more bulky than other circulators.

Another, fairly serious, drawback of the Cheng circulators is that polarization mode dispersion ("PMD") in the circulators is not eliminated unless additional compensation crystals are introduced. Such additional crystals add significant cost and complexity. Polarization mode dispersion is introduced in an optical component when signal energy at a given wavelength is resolved into two orthogonal polarization modes of slightly different propagation velocity or optical path. The resulting difference in propagation time between polarization modes is called differential group delay or PMD. PMD causes a number of serious capacity impairments, including pulse broadening. In addition, alignment of this type of circulators depends on submicron precision positioning of single mode fibers. Therefore, manufacturing of the PMD corrected Cheng circulators is non-trivial.

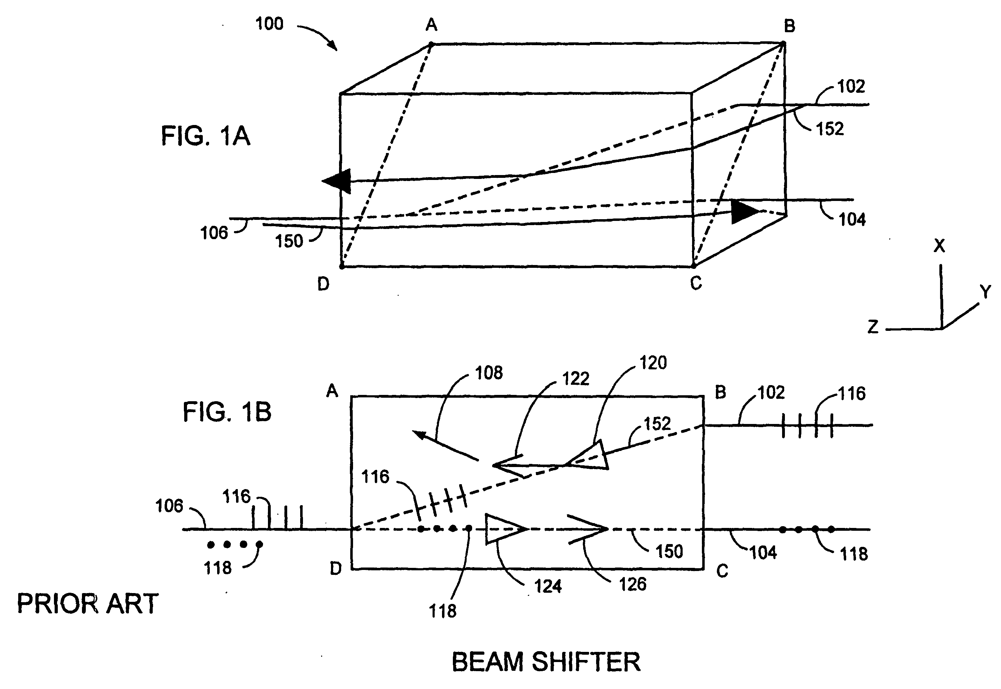

FIGS. 1A-B show respectively an isometric and a cross-sectional view of a walk-off crystal such as that employed in the Cheng and Koga references. Walk off crystals can be used either for splitting a natural light beam into orthogonally polarized rays, or for circulating light beams with orthogonal polarization components. FIG. 1A shows the later case in which a light beams 150-152 with orthogonal polarization states, circulate between respectively ports 106-144 and ports 102-106 of walk-off crystal 100.

FIG. 1B is a cross-sectional view at principal plane ABCD of the crystal 100 shown in FIG. 1A. The optical axis 108 of the crystal is located in the principal plane and at an acute angle that is typically at around 45 degree with respect to the front surface of birefringent crystal, defmed by the plane including AD. The polarization vector, i.e. electric field vector, 118 of ray 150 is normal to the principal section. Thus the propagation vector 124 and Poynting vector 126 for the ray 150 are substantially collinear and no walk-off is exhibited as the ray passes through the crystal to port 104. The polarization, i.e. electric field vector, 116 of ray 152 is parallel to the principal section. Thus the propagation vector 120 and Poynting vector 122 for the ray 152 are not collinear and walk-off is exhibited as the ray passes through the crystal to port 106. The complete explanation of this walk-off effect can be found using electromagnetic theory as embodied in Maxwell's equations. Further explanation, using Huygen's principle, may be found in Hecht, *Optics* 288 (1987) (2d ed. Addison-Wesley).

EP 0,814,361 describes an optical device in which light input from a first optical fiber is split up into two orthogonally polarized beams by a birefringent crystal. Their polarization planes are rotated by a 45 degree Faraday rotator. The beams are refracted by birefringent wedges as extraordinary light and their polarization planes are further rotated by a 45 degree Faraday rotator. A further birefringent crystal combines the beams for output to a fourth optical fiber. Light output from the fourth optical fiber passes through the device to a second optical fiber, and light from the second optical fiber passes to a third optical fiber. The capability of an optical circulator is thereby implemented.

Optical Circulators using Beam Benders

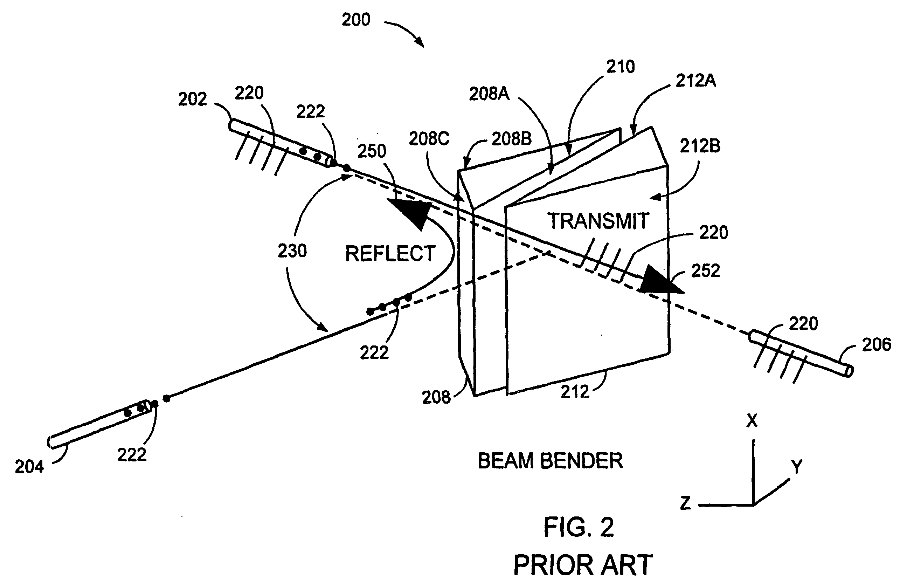

Pan et al., U.S. Patents Nos. 5,682,446; 5,818,981; 5, 689,367 and 5,689,593, describe another type of circulator in which optical ports, beam splitters and non-reciprocal rotators are radially arranged about a polarization sensitive prism pair and associated air gap..Circulation is achieved by polarization sensitive reflection or transmission of an incident light beam from or through the air gap defined between the prism pair as shown in FIG. 2. The length of the beam splitters coupled with the radial arrangement of the ports makes for a circular form factor. The arrangement is bulky and expensive.

FIG. 2 shows an isometric view of a circulating element such as that employed in the Pan et al. references. Prism pair 208, 212 defines an air gap 210 between internal faces 208A, 212A. The prism pair and air gap function as an optical circulator 200 by reflecting and transmitting orthogonally polarized light beams respectively 250-252. Light beam 250 with polarization vector 222 propagates between ports 204 and 202 by entering prism 208 at a normal to face 208C, by internally reflecting off face 208A and air gap 210 within prism 208 and by exiting the prism 208 on a normal to face 208B toward port 202. Light beam 252 with polarization vector 220 propagates between ports 206 and 202 by entering prism 212 on a normal to face 212B, by transmission through gap 210 into prism 208 on a normal to face 208A and by exiting the prism 208 on a normal to 208B toward port 202.

In order to achieve this effect, i.e. polarization sensitive transmission and reflection, several requirements must be met. First, the prisms must have an optical axis. Second, the prisms 208, 212 are separated by an air gap 210 defined between opposing interior faces 208A, 212A of respectively prisms 208, 212. The gap must be greater than the wavelength of the light being transmitted and the interior faces should be parallel. Third, ray 250 must intercept the gap at an angle of incidence greater than a critical angle $\theta c$ where $\theta c = ArcTan(n)$ and n is the corresponding index of refraction of prism 208 for the polarization vector 222 of ray 250. Fourth, each port enters the corresponding one of the prism pairs through a dedicated face at an angle normal to the face. Fifth, the angle 230 between ports 202-204 is a large angle, e.g. 80°, since the internal reflection experienced by beam requires that the beam enter the prism at a near grazing angle of incidence with respect to the internal face 208A through face 208C.

Given the above-mentioned problems with prior art optical circulators, there is a need for a simplified optical circulator comprised of simple optical elements with reduced polarization mode dispersion that is suitable for volume manufacturing.

SUMMARY OF THE INVENTION

In one aspect, the invention relates to an optical circulator as defined in claim 1.

A second aspect of the invention relates to a method of adjusting beam separation of optical beams in such an optical circulator the method comprising adjusting a length of a complete gap along the longitudinal axis of the circulator and defined by the first and second beam angle turners.

A third aspect of the invention relates to a method of circulating an optical signal comprising passing it through an optical pathway wherein the optical pathway comprises at least one circulator according to the first aspect of the invention.

## BRIEF DESCRIPTION OF THE DRAWINGS

FIGS. 1A-B show respectively an isometric and a cross-sectional view of a Prior Art walk-off crystal.

FIG. 2 shows an isometric view of a Prior Art prism and air gap functioning as an optical circulator by respectively transmitting and reflecting orthogonally polarized light beams.

FIG. 3 shows a side isometric view of an embodiment of a three-port optical circulator according to the invention.

FIGS. 4A-B show a top and side isometric view of the three-port optical circulator of FIG. 3.

FIGS. 5A-B show cross sectional view of the three-port optical circulator of FIG. 3, with the spatial location and polarization states of the light beams traveling through the inventive circulator being indicated.

FIG. 6 shows a side isometric view of another embodiment of a three-port optical circulator according to the invention.

FIGS. 7A-B show a top and side isometric view of the three-port optical circulator of FIG. 6.

FIGS. 8A-B show cross sectional view of the three-port optical circulator of FIG. 6, with the spatial location and polarization states of the light beams traveling through the inventive circulator being indicated.

FIG. 9 shows a side isometric view of an embodiment of a four-port optical circulator according to the invention.

FIGS. 10A-B show a top and side isometric view of the four-port optical circulator of FIG. 9.

FIGS. 11A-C show cross sectional view of the four-port optical circulator of FIG. 9, with the spatial location and polarization states of the light beams traveling through the inventive circulator being indicated.

FIG. 12 shows a side isometric view of another embodiment of a three-port optical circulator according to the invention.

FIGS. 13A-B show a top and side isometric view of the three-port optical circulator of FIG. 6

FIGS. 14A-B show cross sectional view of the three-port optical circulator of FIG. 12, with the spatial location and polarization states of the light beams traveling through the inventive circulator being indicated.

FIG. 15 shows an isometric view of a prism functioning as an optical circulator by transmitting at divergent paths orthogonally polarized light beams.

FIG. 16 shows an isometric view of an alternate embodiment of the optical circulator of FIG. 15 with an optical element for focusing and collimating light beams.

FIGS. 17A-D, 18A-D show alternate embodiments of the optical circulator of FIG. 15.

FIG. 19 shows an isometric view of an alternate embodiment of an optical circulator including graded index of refraction lens elements and non-reciprocal rotators.

FIGS. 20A-B show a top and side views of the optical circulator of FIG. 19.

FIGS. 21A-B are graphs showing the spatial location and polarization states of the light beams traveling through the optical circulator of FIG. 19.

FIG. 22 shows an isometric view of an alternate embodiment of an optical circulator including double convex lens elements and non-reciprocal rotators.

FIGS. 23A-B show top and side views of the optical circulator of FIG. 22.

FIGS. 24A-B are graphs showing the spatial location and polarization states of the light beams traveling through the optical circulator of FIG. 22.

FIG. 25 shows an isometric view of an alternate embodiment of an optical circulator including graded index of refraction lens elements and non-reciprocal and reciprocal rotators.

FIGS. 26A-B show top and side views of the optical circulator of FIG. 25.

FIGS. 27A-B are graphs showing the spatial location and polarization states of the light beams traveling through the optical circulator of FIG. 25.

FIG. 28 shows an isometric view of the optical circulator of FIG. 19 with six ports.

FIGS. 29A-B show top and side views of the optical circulator of FIG. 28.

FIGS. 30A-E are graphs showing the spatial location and polarization states of the light beams traveling through the optical circulator of FIG. 28.

FIG. 31 shows an isometric view of the optical circulator with dual prisms.

FIGS. 32A-B show top and side views of the optical circulator of FIG. 31.

FIGS. 33A-B are graphs showing the spatial location and polarization states of the light beams traveling through the optical circulator of FIG. 31.

## DETAILED DESCRIPTION OF THE INVENTION

The circulators of this invention have several advantages over prior art circulators. First, both first optical port 302 and third optical port 304, as described below, are placed next to each other and may share the same imaging element. This means that the three port embodiments of the inventive circulators may have a reduced lens count and a much reduced optical footprint in comparison with conventional three port circulators. Conventional three port optical circulators have an arrangement wherein each optical port has its own individual imaging element. Further, the use of beam angle turners such as Wollaston or modified Wollaston or Rochon or modified Rochon prism pairs allows the separation between the light traveling from first optical port 302 to second optical port 306, described below, and the light traveling from second optical port 306 to third optical port 304 to be adjusted. This is accomplished by adjusting the length of complete gap 336, described below. In comparison with the prior art walk-off crystal approach, a long birefringent crystal is not needed to achieve acceptable separation between the light pathways. The modified Wollaston or Rochon prisms differ from conventional Wollaston or Rochon prisms in their relative optical axis orientation, for example, in a modified Wollaston prism, the optical axis of the wedges are oriented perpendicularly to one another and 45 degrees in the plane of normal incidence with respect to the optical axis in a conventional Wollaston prism. An advantage of using such a modified prism is that the use of an additional waveplate may be able to be avoided. An additional waveplate increases system complexity and leads to narrower operating wavelength bandwidth. Another advantage of the inventive optical circulators accrues because of the inventive circulator's symmetrical crystal layout. The inventive circulator's symmetrical crystal layout provides a symmetric beam path for two polarization components from each port, leading to much reduced, or even substantially eliminated, polarization mode dispersion. In another aspect of the invention, only one lens is used on each side of the circulator, leading to fewer optical elements and a smaller footprint. In another aspect of the invention, an optical signal may be circulated by passing it though an optical pathway wherein the optical pathway comprises at least one circulator according to the invention. In another aspect of the invention, the inventive optical circulators may be used in telecommunications systems and in WDM's, EDFA's, add-drop multiplexers, dispersion compensators and OTDR's. These and other advantages of the inventive optical circulators are elaborated in the specific embodiments now described.

In one aspect, the invention relates to an optical circulator having a longitudinal axis comprising a first beam displacer/combiner that displaces at least one optical beam into two polarized component beams and combines at least two polarized component beams to form an optical beam; a first nonreciprocal rotator, optically coupled to the first beam displacer/combiner distally along the longitudinal axis, for rotating the polarization orientation of the polarized component beams; a first beam angle turner, optically coupled to the first nonreciprocal rotator distally along the longitudinal axis, for turning the polarized component beams through an angle, wherein the path of the polarized beam converges to or diverges from the longitudinal axis of the circulator depending upon the polarization and propagation direction of the polarized component beam; a second beam angle turner, optically coupled to the first beam angle turner distally along the longitudinal axis, for turning the polarized component beams through an angle, wherein the path of the polarized beam converges to or diverges from the longitudinal axis of the circulator depending upon the polarization and propagation direction of the polarized component beam; a second nonreciprocal rotator, optically coupled to the second beam angle turner distally along the longitudinal axis, for rotating the polarization orientation of the polarized component beams; and a second beam displacer/combiner, optically coupled to the second nonreciprocal rotator distally along the longitudinal axis, that displaces at least one optical beam into two polarized component beams and combines at least two polarized component beams to form an optical beam, wherein the first and second beam angle turners define a complete gap along the longitudinal axis of the optical circulator.

In another aspect, the invention relates to the optical circulator further comprising at least one imaging element, optically coupled to the first beam displacer/combiner proximally along the longitudinal axis, for turning two or more adjacently spaced optical beams in a convergent or divergent propagation direction with respect to the longitudinal axis of the circulator. In yet another aspect, the invention relates to the optical circulator further comprising at least one imaging element, optically coupled to the second beam displacer/combiner distally along the longitudinal axis, for coupling light into or collimating light from the second beam displacer/combiner.

In still another aspect, the invention relates to the optical circulator wherein the first and second beam displacer/combiners comprise birefringent crystal plates. In another aspect, the invention relates to the optical circulator further comprising three or more optical ports distributed such that at least two optical ports are optically coupled to the first beam displacer/combiner proximally along the longitudinal axis, and one optical port is optically coupled to the second beam displacer/combiner distally along the longitudinal axis. In yet another aspect, the invention relates to the optical circulator comprising 4 or more optical ports.

In a further aspect, the invention relates to the optical circulator wherein the first or second beam angle turners comprise Rochon or Wollaston prisms, modified Rochon or Wollaston prisms or a pair of birefringent wedges separated by a complete gap. In still another aspect, the invention relates to the optical circulator wherein the each of the first or second beam angle turners comprise two or more Rochon, Wollaston, modified Rochon or Wollaston prisms or a pair of birefringent wedges separated by a complete gap. In yet another aspect, the invention relates to the optical circulator wherein the first and second beam angle turners define a complete gap between the first and second beam angle turners. In another aspect, the invention relates to the optical circulator wherein the the complete gap separates portions of the first or second beam angle turners. In still another aspect, the invention relates to the optical circulator wherein the first or second nonreciprocal rotators comprise Faraday rotators.

In a further aspect, the invention relates to the optical circulator wherein the first or second nonreciprocal rotators comprise two or more nonreciprocal rotators, and each of the two or more nonreciprocal rotators rotates a polarization orientation of polarized component beams passing therethrough.

In yet another aspect, the invention relates to the optical circulator wherein each of the two or more nonreciprocal rotators rotates a polarization orientation of polarized component beams passing through to a different polarization orientation with respect to others of the two or more nonreciprocal rotators.

In an aspect, the invention relates to an optical telecommunications system comprising the optical circulator described above. In another aspect, the invention relates to the optical telecommunications system, wherein the optical telecommunications system comprises a wavelength division multiplexer, an Erbium-doped fiber amplifier, an add-drop multiplexer, a dispersion compensator, or an optical time domain reflectometer.

In an aspect, the invention relates to a method of adjusting beam separation of optical beams entering or exiting the optical circulator described above comprising adjusting a length of a complete gap along the longitudinal axis of the optical circulator and defined by the first and second beam angle turners.

In another aspect, the invention relates to a method of circulating a optical signal comprising passing it though an optical pathway wherein the optical pathway comprises at least one circulator as described above.

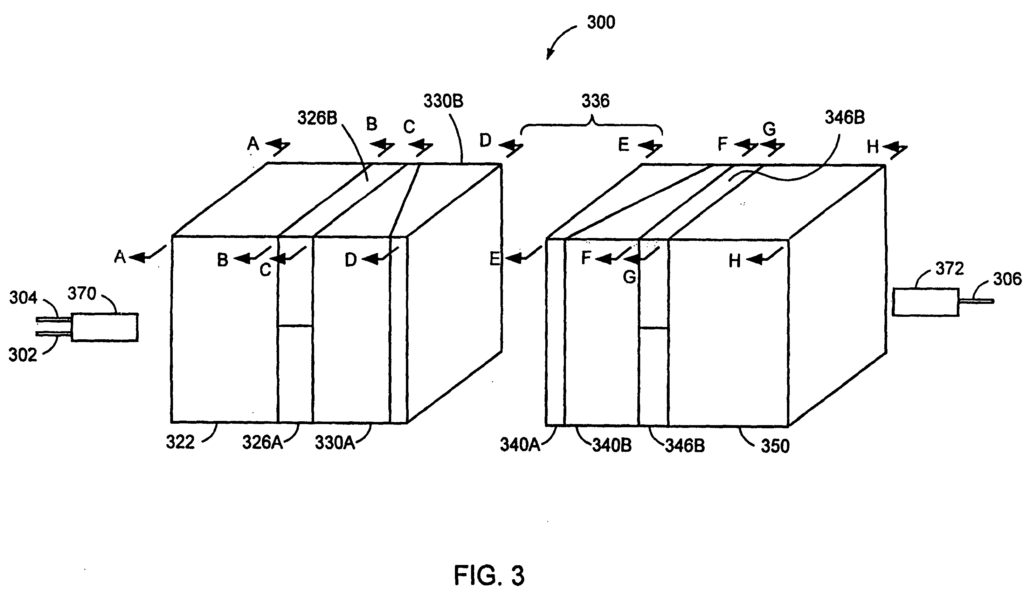

FIG. 3 shows an isometric view of an optical circulator, according to the invention, that uses a beam turner. Optical circulator 300 includes first optical port 302, third optical port 304, second optical port 306, first imaging element 370, second imaging element 372, first beam displacer/combiner 322, first nonreciprocal rotators 326A-B, first beam angle turners 330A-B, second beam angle turner 340A-B, second nonreciprocal rotators 346A-B, and second beam displacer/combiner 350.

Optical circulator 300 possesses a longitudinal axis, along which the various optical components are distributed, and a proximal and distal end. First optical port 302, and third optical port 304 are located at a proximal end, and second optical port 306 is located at a distal end of the optical circulator.

In preferable embodiments, the first, second, and third optical ports may comprise integrated optical circuits or optical fibers. First imaging element 370 may be preferably located on the optical path between the first and third optical ports and the first beam displacer/combiner. Second imaging element 372 may be preferably located on the optical path between the second optical port and the second beam displacer/combiner. Such arrangements result in the first and third optical ports on the proximal side and the second optical port on the distal side being conjugate images of each other. In a preferable embodiment, the imaging element may be a collimating lens. In a more preferable embodiment, the collimating lens may be a Grin lens. Preferably, the Grin lens may be located at second optical port 306, as shown.

First beam displacer/combiner 322 is optically coupled distally to the first and third optical ports. In a preferable embodiment, the first beam displacer/combiner is a birefringent crystal. In a more preferable embodiment, the first beam displacer/combiner comprises Yttrium Orthovanadate, calcite, rutile or α-BBO (barium borate). First nonreciprocal rotators 326A-B comprise a nonreciprocal Faraday polarization rotator and are optically coupled distally from the first beam displacer/combiner. In a preferable embodiment, first nonreciprocal rotators 326A-B comprise yttrium-iron-garnet (YIG), or Bi-added thick film crystals. The Bi-added thick film crystals preferably comprise a combination of $(YbTbBi)_3Fe_5O_{12}$ and $(GdBi)_3(FeAlGa)_5O_{12}$ or of YIG and $Y_{3x}Bi_xFe_5O_{12}$. First beam angle turners 330A-B comprises two birefringent wedges, and is optically coupled distally to the first nonreciprocal rotators. The first, and second, beam angle turner changes the beam propagation direction depending upon the beam polarization orientation and traveling direction. In a more preferable embodiment, the first beam angle turner comprises a prism. In a still more preferable embodiment, the first beam angle turner comprises a Wollaston, Rochon, or modified Wollaston or Rochon prism. These prisms change the propagation direction of an optical beam depending upon its polarization.

Conventional Wollaston and Rochon prisms are discussed further in Hecht, Optics 292 & 329 (1987) (2d. ed. Addison-Wesley). The modified Rochon or Wollaston prism differs from a conventional Rochon or Wollaston prism in the orientation of the optical axes of its wedges. In a modified Rochon prism, the optical axis of one of the wedges is oriented normal to the plane of normal incidence, which is the same as in a conventional Rochon prism. However, the optical axis in the other wedge is oriented 45 degrees in the plane of normal incidence with respect to the optical axis orientation the wedge would possess in a conventional Rochon prism. Similarly, in a modified Wollaston prism, the optical axis of each of its birefringent wedges are oriented perpendicularly to each other and 45 degrees in the plane of normal incidence with respect to the optical axis in a conventional Wollaston prism. There is a complete gap 336, defined by the first beam angle turners 330A-B, and the second beam angle turner 340A-B that is located distally from the first beam angle turners 330A-B. The first and second beam angle turners are therefore spaced apart from one another. The length of the complete gap defined by the first and second beam angle turners defines the spatial separation between the beam from the first optical port to the second optical port and the beam from the second optical port to the third optical port. Therefore, adjusting the length of the complete gap will permit adjustment of the spatial separation of the beams. The length of complete gap 336 is proportional to the separation of the beams at cross section D-D. The relationship may be described as D = L * θ, where D is the beam separation distance, L is the length of complete gap 336, and θ is the beam separation angle. Second nonreciprocal rotators 346A-B comprise a nonreciprocal Faraday polarization rotator and is optically coupled distally from the second beam angle turners. In a preferable embodiment, the second nonreciprocal rotators comprise yttrium-iron-garnet (YIG), or Bi-added thick film crystals. The Bi-added thick film crystals preferably comprise a combination of $(YbTbBi)_3Fe_5O_{12}$ and $(GdBi)_3(FeAlGa)_5O_{12}$, or of YIG and $Y_{3x}Bi_xFe_5O_{12}$. Second beam displacer/combiner 350 is optically coupled distally from the second nonreciprocal rotators and proximally from the second optical port.

In operation, unpolarized light from first optical port 302 exits first imaging element 370 at a slight angle to the longitudinal axis of the first imaging element. The unpolarized light then enters first beam displacer/combiner 322, which acts as a polarization sensitive beam displacement plate. The unpolarized light is decomposed into two orthogonal polarization components. Within the first beam displacer/combiner, the first component is an ordinary light ray (O-ray) and the other component is an extraordinary light ray (E-ray). The E-ray walks off vertically from the O-ray through the first beam displacer/combiner, with the result that there is a top and bottom component.

The components then enter first nonreciprocal rotators 326A-B. In a preferable embodiment, first nonreciprocal rotator 326A rotates by 45 degrees counterclockwise a component of light passing through it from first optical port 302 to second optical port 306. In another preferable embodiment, first nonreciprocal rotator 326B rotates by 45 degrees clockwise a component of light passing through it from first optical port 302 to second optical port 306. In another preferred embodiment, the relative directions of rotation imparted by first nonreciprocal rotator 326A and second nonreciprocal rotator 346A, and by first nonreciprocal rotator 326B and second nonreciprocal rotator 346B, may be respectively reversed.

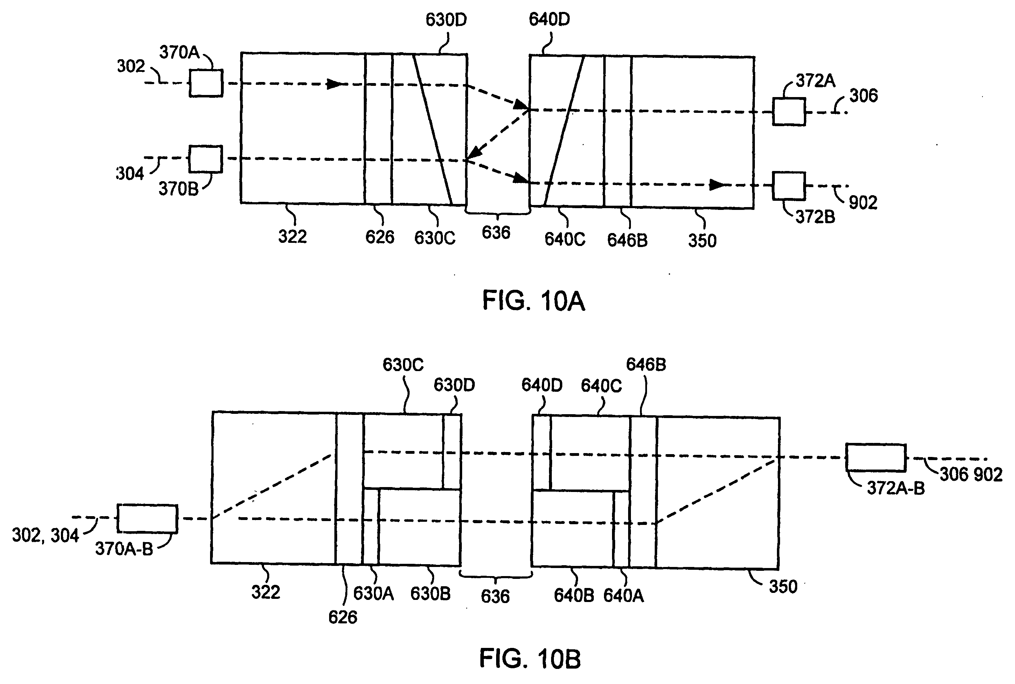

Upon exiting the first nonreciprocal rotators, both components have the same polarization orientation before entering first beam angle turners 330A-B. First beam angle turners 330A-B turn both components towards the longitudinal axis of the circulator. The components then exit the first beam angle turner and transit complete gap 336. The components next pass through second beam angle turner 340A-B, which bends the components such that they are aligned with the longitudinal axis of second imaging element 372. Viewing from the top of the circulator (as seen in FIG. 10A, discussed below), the longitudinal axis of the second imaging element should be on substantially the same line with the axis of the first imaging element to achieve circulation from second optical port 306 to third optical port 304. Complete gap 336 is adjusted such that the angle turning at second beam angle turners 340A-B occurs at the circulator axis that is in line with the axis of first imaging element 370 and second imaging element 372. The components then enter second nonreciprocal rotators 346A-B. In a preferable embodiment, second nonreciprocal rotator 346A rotates by 45 degrees clockwise a component of light passing through it from first optical port 302 to second optical port 306. In another preferable embodiment, second nonreciprocal rotator 346B rotates by 45 degrees counter-clockwise a component of light passing through it from first optical port 302 to second optical port 306. The component then pass through second beam displacer/combiner 350, where the beams are recombined. The recombined light beam then passes through second optical port 306 via second imaging element 372. Unpolarized light entering second optical port 306 will travel in the opposite direction. Second nonreciprocal rotators 346A-B will direct light along a different optical path towards third optical port 304. This creates optical circulation.

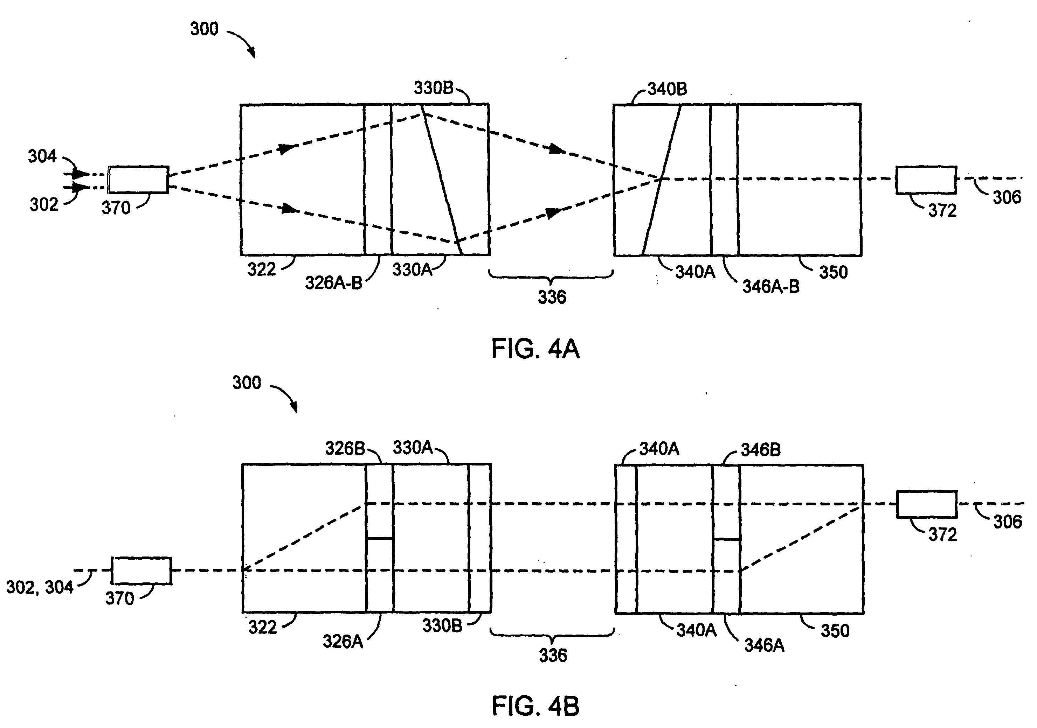

FIGS. 4A-B show top and side isometric views of optical circulator 300. FIG. 4A shows a top isometric view of optical circulator 300, together with an internal ray trace, showing directions of the light rays within the circulator. FIG. 4B shows a side isometric view of optical circulator 300, together with an internal ray trace, showing directions of the light rays within the circulator. Optical circulator 300 as depicted in FIGS 4A-B has the same components, structure and operation as optical circulator 300 as depicted in FIG 3.

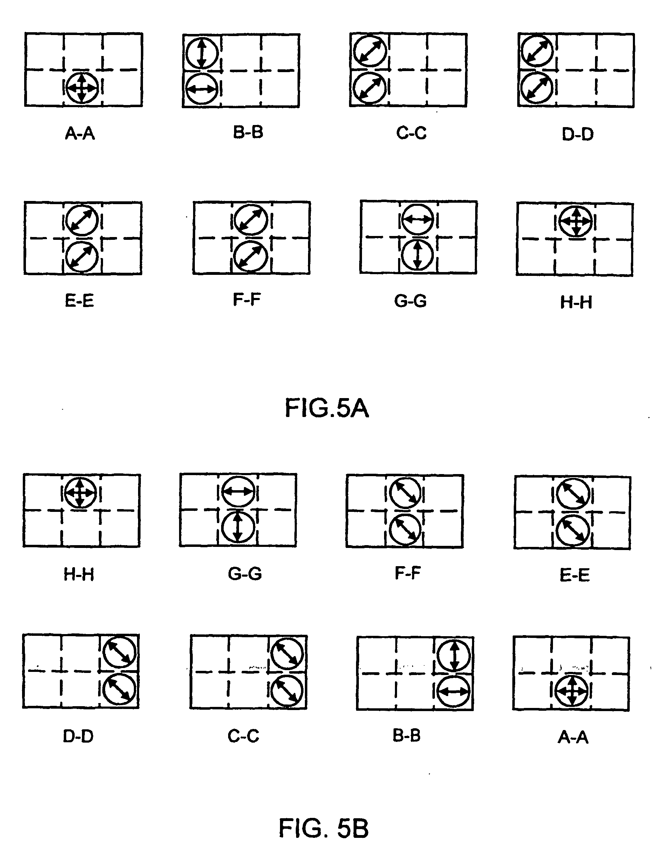

The operation of optical circulator 300 is illustrated in the cross sectional schematic representations shown in FIGS. 5A-B. FIG. 5A shows how the two orthogonal components of unpolarized light entering at first optical port 302 are manipulated so as to arrive at second optical port 306. The two unpolarized orthogonal components are shown at cross section A-A, as they exit first imaging element 370 and enter the first beam displacer/combiner. At cross-section B-B, upon exiting the first beam displacer/combiner, the top component is shown as being walked off vertically from the bottom component. At cross-section C-C, upon exiting first nonreciprocal rotators 326A-B, the polarization of the top components is shown as being rotated 45 degrees clockwise while the bottom component is shown as being rotated 45 degrees counter-clockwise. At cross-section D-D, upon exiting the first beam angle turner, both of the components are unchanged in polarization orientation and spatial position. Additionally, the first beam angle turner changes the propagation directions of the components from the directions that the components possessed at cross-section C-C. At cross-section E-E, upon traversing complete gap 336, both the top and bottom components are shown as being walked off equidistantly in the same direction -- to the right of the cross-section of the circulator. At cross-section F-F, upon exiting second beam angle turner 340A-B, both of the components are unchanged in polarization orientation and spatial position. Additionally, the second beam angle turner 340A-B changes the propagation directions of the components to be substantially in line with the longitudinal axis of second imaging element 372. At cross-section G-G, upon exiting second nonreciprocal rotators 346A-B, the polarization of the top component is shown as being rotated 45 degrees clockwise while the bottom component is shown as being rotated 45 degrees counter-clockwise. At cross-section H-H, upon exiting second beam displacer/combiner 350, the two components are recombined to,exit at second optical port 306.

FIG. 5B shows how the two orthogonal components of unpolarized light entering at second optical port 306 are manipulated so as to arrive at third optical port 304. The two unpolarized orthogonal components are shown at cross section H-H as they enter the second beam displacer/combiner. At cross-section G-G, the bottom component is shown as being walked off vertically downward from the top component, thus creating a top and bottom component. At cross-section F-F, the polarization of the top component is shown as being rotated 45 degrees clockwise while the bottom component is shown as being rotated 45 degrees counter-clockwise. Both polarization components traveling from second optical port 306 to third optical port 304 are now in the same polarization orientation. The components are also perpendicular to the polarization components traveling from first optical port 302 to second optical port 306. The orthogonal polarization orientation is due to the non-reciprocity of second nonreciprocal rotators 346A-B. At cross-section E-E, both of the components are unchanged in polarization orientation and spatial position, but their propagation directions have been changed. Additionally, the beam path of the polarization components traveling from second optical port 306 to third optical port 304 is different from the polarization components traveling from first optical port 302 to second optical port 306 because the polarization orientations of the two sets of components are perpendicular to each other as they are traveling through both beam angle turners. At cross-section D-D, both the top and bottom components are shown as being walked off equidistantly in the same direction -- to the right of the cross-section of the circulator. At cross-section C-C, both of the components are unchanged in polarization orientation and spatial position, but their propagation directions have been changed to be substantially in alignment with third optical port 304. At cross-section B-B, the polarization of the top component is shown as being rotated 45 degrees clockwise while the bottom component is shown as being rotated 45 degrees counter-clockwise. At cross-section A-A, the two components are recombined to exit at third optical port 304.

The beams traveling from first optical port 302 to second optical port 306 and from second optical port 306 to third optical port 304 enter and exit first beam displacer/combiner 322 and second beam displacer/combiner 350 are approximately in the same spatial location. However, the two beams possess different propagation directions such that they will travel to different optical ports, as shown in FIGS. 4A-B. This situation is generally true for embodiments according to the invention that are arranged in a fashion similar to that of optical circulator 300.

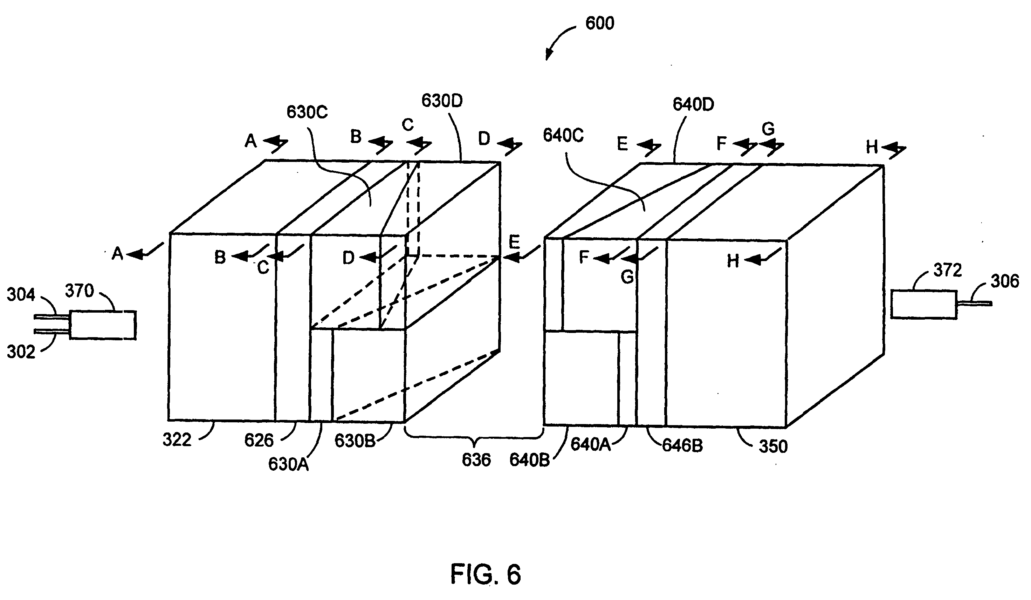

FIG. 6 shows a side isometric view of optical circulator 600, according to the invention. Optical circulator 600 includes first optical port 302, third optical port 304, second optical port 306, first imaging element 370, second imaging element 372, first beam displacer/combiner 322, first nonreciprocal rotator 626, first beam angle turners 630A-D, second beam angle turners 640A-D, second nonreciprocal rotator 646, and second beam displacer/combiner 350.

Optical circulator 600 possesses a longitudinal axis, along which the various optical components are distributed, and a proximal and distal end. First optical port 302, and third optical port 304 are located at a proximal end, and second optical port 306 is located at a distal end of the optical circulator.

In preferable embodiments, the first, second, and third optical ports may comprise integrated optical circuits or optical fibers. First imaging element 370 may be preferably located on the optical path between the first and third optical ports and the first beam displacer/combiner. Second imaging element 372 may be preferably located on the optical path between the second optical port and the second beam displacer/combiner. Such arrangements result in the first, and third optical ports on the proximal side and the second optical port on the distal side being conjugate images of each other. In a preferable embodiment, the imaging element may be a collimating lens. In a more preferable embodiment, the imaging element may be a Grin lens. The Grin lens may be located at second optical port 306, as shown.

First beam displacer/combiner 322 is optically coupled distally to the first and third optical ports. In a preferable embodiment, the first beam displacer/combiner is a birefringent crystal. In a more preferable embodiment, the first beam displacer/combiner comprises Yttrium Orthovanadate, calcite, rutile or $\alpha$-BBO. First nonreciprocal rotator 626 comprises a nonreciprocal Faraday polarization rotator and is optically coupled distally from the first beam displacer/combiner. In a preferable embodiment, first nonreciprocal rotator 626 comprises yttrium-iron-garnet (YIG), or Bi-added thick film crystals. The Bi-added thick film crystals preferably comprise a combination of $(YbTbBi)_3Fe_5O_{12}$ and $(GdBi)_3$ $(FeAlGa)_5O_{12}$, or of Y.I.G. and $Y_{3x}Bi_xFe_5O_{12}$. First beam angle turners 630A-D comprise four birefringent wedges that are optically coupled distally to the first nonreciprocal rotators and to each other. In a more preferable embodiment, the first beam angle turners comprise one or more prisms. In a still more preferable embodiment, the first beam angle turners comprises a set of Wollaston, Rochon or modified Wollaston or Rochon prisms. The beam angle turners, which are indicated in optical circulator 600 by the pairs of beam angle turners 630A-B, 630C-D, 640A-B, and 640C-D, are stacked in the embodiment as shown. The arrangement of beam angle turners 630A-B and 630C-D is identical, except that they are rotated by 180 degrees with respect to the circulator's longitudinal axis. Similarly, beam angle turners 640A-B and 640C-D are identical, except for their 180 degrees rotation with respect to the circulator's longitudinal axis. Thus, beam angle turners 630C-D are stacked on top of beam angle turners 630C-D, to form a stacked set of beam angle turners. Likewise beam angle turners 640C-D are stacked on top of beam angle turners 1208A-B to form a stacked set of beam angle turners. The effect of these stacked sets of beam angle turners is to permit angle turning of both the top and bottom components that are orthogonal to each other in the same direction without having to change their orientation.

There is a complete gap 636, defined by the first beam angle turners 630A-D, and the second beam angle turners 640A-D that is located distally from first beam angle turners 630A-D. The first and second beam angle turners are therefore spaced apart from one another. The length of the complete gap defined by the first and second beam angle turners defines the spatial separation between the beam from the first optical port to the second optical port and the beam from the second optical port to the third optical port. Therefore, adjusting the length of the complete gap will permit adjustment of the spatial separation of the beams, as has been discussed above.

Second nonreciprocal rotator 646 comprises a nonreciprocal Faraday polarization rotator and is optically coupled distally from the second beam angle turners. In a preferable embodiment, the second nonreciprocal rotators comprise yttrium-iron-garnet (YIG), or Bi-added thick film crystals. The Bi-added thick film crystals comprise a combination of $(YbTbBi)_3Fe_5O_{12}$ and $(GdBi)_3(FeAlGa)_5O_{12}$, or of YIG and $Y_{3x}Bi_xFe_5O_{12}$. Second beam displacer/combiner 350 is optically coupled distally from the second nonreciprocal rotators and proximally from the second optical port.

In operation, unpolarized light from first optical port 302 and exits first imaging element 370 at a slight angle to the longitudinal axis of first imaging element 370. The unpolarized light then enters first beam displacer/combiner 322, which acts as a polarization sensitive beam displacement plate. The unpolarized light is decomposed into two orthogonal polarization components. Within the first beam displacer/combiner, the first component is an ordinary light ray (O-ray) and the other component is an extraordinary light ray (E-ray). The E-ray walks off vertically from the O-ray through the first beam displacer/combiner, with the result that there is a top and bottom component. The components then enter first nonreciprocal rotator 626. In a preferable embodiment, first nonreciprocal rotator 626 rotates by 45 degrees clockwise both the top and bottom components of light passing through it from first optical port 302 to second optical port 306. In another preferred embodiment, the relative directions of rotation imparted by first nonreciprocal rotator 626 and second nonreciprocal rotator 646 may be respectively reversed.

Upon exiting the first nonreciprocal rotators, the components enter first beam angle turners 630A-D. The first beam angle turners turn both polarization components towards the longitudinal axis of the circulator without changing their polarization orientation. The components then exit the first beam angle turner and transit complete gap 636. The components next pass through second beam angle turners 640A-D, which bends the components such that they are aligned with the longitudinal axis of second imaging element 372. The first and second beam angle turners and the complete gap are adjusted so as to achieve alignment of the components with the longitudinal axis of the second imaging element and/or second optical port 306, as discussed above. The components then enter second nonreciprocal rotator 646. In a preferable embodiment, second nonreciprocal rotator 646 rotates by 45 degrees clockwise both top and bottom components of light passing through it from first optical port 302 to second optical port 306. The component then pass through second beam displacer/combiner 350, where the beams are recombined. The recombined light beam then passes through second optical port 306 via second imaging element 370. Unpolarized light entering second optical port 306 will travel along a different path from light traveling from first optical port 302 to second optical port 306. This is due to the non-reciprocity of first nonreciprocal rotator 626 and second nonreciprocal rotator 646. The light ultimately exits at third optical port 304. This creates optical circulation.

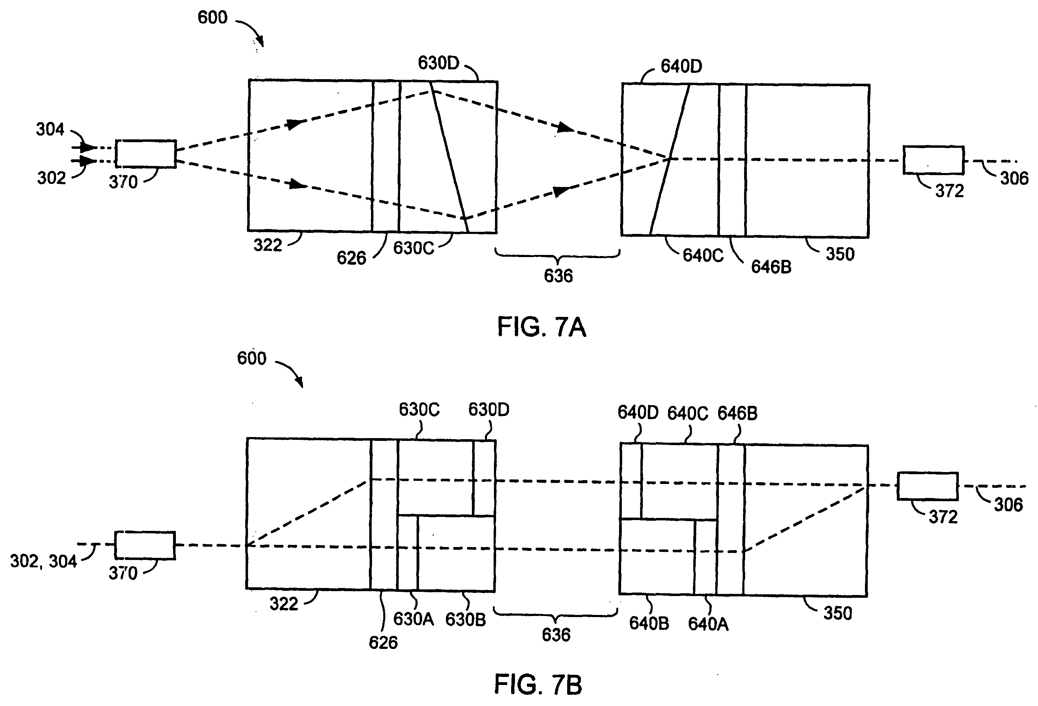

FIGS. 7A-B show top and side isometric views of optical circulator 600. FIG. 7A shows a top isometric view of optical circulator 600, together with an internal ray trace, showing directions of the light rays within the circulator. FIG. 7B shows a side isometric view of optical circulator 600, together with an internal ray trace, showing directions of the light rays within the circulator. Optical circulator 600 as depicted in FIGS 7A-B has the same components, structure and operation as optical circulator 600 as depicted in FIG 6.

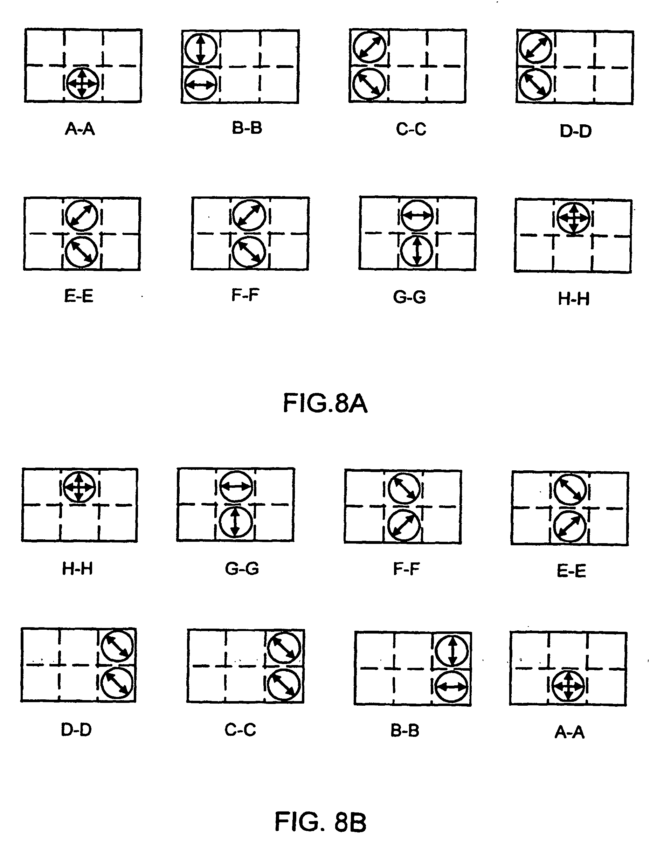

The operation of optical circulator 600 is illustrated in the cross sectional schematic representations shown in FIGS. 8A-B. FIG. 8A shows how the two orthogonal components of unpolarized light entering at first optical port 302 are manipulated so as to arrive at second optical port 306. The two unpolarized orthogonal components are shown at cross section A-A, as they exit first imaging element 370 and enter the first beam displacer/combiner. At cross-section B-B, upon exiting first beam displacer/combiner 322, the top component is shown as being walked off vertically from the bottom component. At cross-section C-C, upon exiting first nonreciprocal rotator 626, the polarization of the top and bottom component is shown as being rotated 45 degrees clockwise. At cross-section D-D, upon exiting first beam angle turners 630A-D, both of the components are unchanged in polarization orientation and spatial position, but their propagation direction is changed in the same direction. At cross-section E-E, upon traversing complete gap 1206, both the top and bottom components are shown as being walked off equidistantly in the same direction -- to the right of the cross-section of the circulator. At cross-section F-F, upon exiting second beam angle turners 640A-D, both of the components are unchanged in polarization orientation and spatial position. Additionally, their propagation direction is changed to be in alignment with the longitudinal axis of second optical port 306. At cross-section G-G, upon exiting second nonreciprocal rotator 646, the polarization of both the top and bottom components is shown as being rotated 45 degrees clockwise. At cross-section H-H, upon exiting second beam displacer/combiner 350, the two components are recombined to exit at second optical port 306.

FIG. 8B shows how the two orthogonal components of unpolarized light entering at second optical port 306 are manipulated so as to arrive at third optical port 304. The two unpolarized orthogonal components are shown at cross section H-H as they enter the second beam displacer/combiner. At cross-section G-G, the bottom component is shown as being walked off vertically downward from the top component, thus creating a top and bottom component. At cross-section F-F, the polarization of both the top and bottom component is shown as being rotated 45 degrees clockwise. Both polarization components traveling from second optical port 306 to third optical port 304 are now in the same polarization orientation. The components are also perpendicular to the polarization components traveling from first optical port 302 to second optical port 306. The orthogonal polarization orientation is due to the non-reciprocity of second nonreciprocal rotator 646. At cross-section E-E, both of the components are unchanged in polarization orientation and spatial position, but are changed in their propagation direction such that they have substantially the same propagation direction. Additionally, the beam path of the polarization components traveling from second optical port 306 to third optical port 304 is different from the polarization components traveling from first optical port 302 to second optical port 306 because the polarization orientations of the two sets of components are perpendicular to each other as they are traveling though the beam angle turners. At cross-section D-D, both the top and bottom components are shown as being walked off equidistantly in the same direction -- to the right of the cross-section of the circulator. At cross-section C-C, both of the components are unchanged in polarization orientation and spatial position, but their propagation direction is changed to be in alignment with the longitudinal axis of third optical port 304. At cross-section B-B, the polarization of both the top and bottom component is shown as being rotated 45 degrees clockwise. At cross-section A-A, the two components are recombined to exit at third optical port 304.

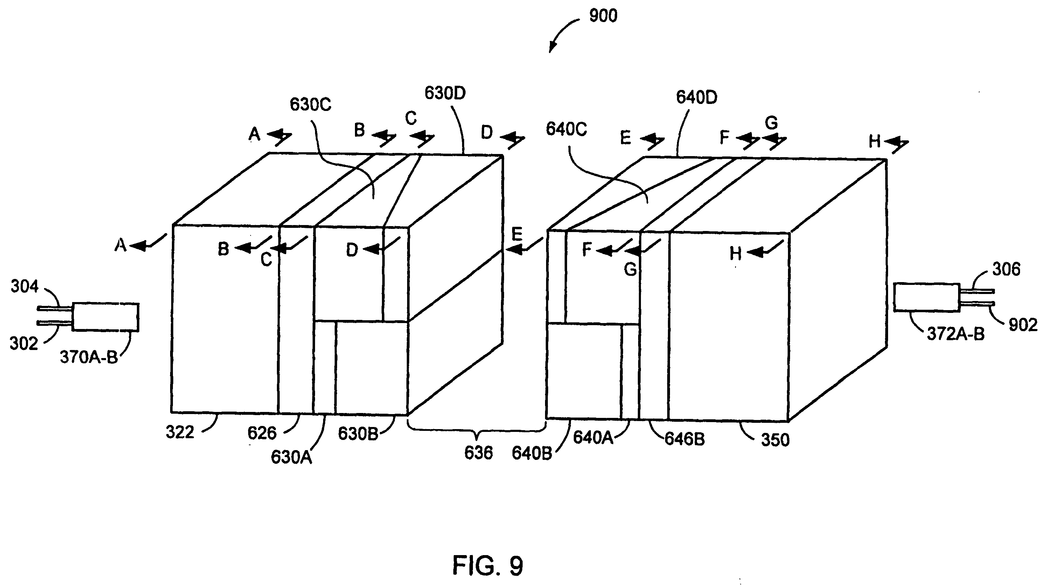

FIG. 9 shows a side isometric view of optical circulator 900, according to the invention. Optical circulator 900 shows a four optical port system. A significant advantage of the optical circulators according to the invention is that they are expandable. Such expandable optical circulators may have multiple optical ports beyond the minimum three optical ports. For example, inventive optical ports may have four, five, six or more optical ports, depending upon the application. This offers the advantage of lower cost and increased reliability, due to the lower number of circulators needed as compared to the prior art. Additionally, the optical footprint is reduced.

Optical circulator 900 is identical in components and structure to optical circulator 600, shown in FIG. 6, except that a fourth optical port 902 distal to the second beam displacer/combiner, and optically coupled to it via second imaging element 372, is added. Additionally, in a preferable embodiment, each optical port may include an imaging element, which more preferably is a collimating lens. These lenses are indicated as 370A-B and 372A-B. Thus, it is possible to expand the inventive three port device into a multiple port device simply by providing two arrays of fibers on each side with equal spacing between the optical ports in each array. The inter-array spacing is not critical, because the distance between the prism pairs is continuously adjustable to accommodate different fiber arrangements.

In operation, optical circulator 900 functions identically to optical circulator 600, except with respect to unpolarized light entering third optical port 304. In optical circulator 900, light is permitted to enter into third optical port 304, and is received at fourth optical port 902. The unpolarized light passes through first optical port 302 and enters first beam displacer/combiner 322 via first imaging element 370A. First beam displacer/combiner 322 acts as a polarization sensitive beam displacement plate. The unpolarized light is decomposed into two orthogonal polarization components. Within the first beam displacer/combiner, the first component is an ordinary light ray (O-ray) and the other component is an extraordinary light ray (E-ray). The E-ray walks off vertically upwards from the O-ray through the first beam displacer/combiner, with the result that there is a top and bottom component. The components then enter first nonreciprocal rotator 626. In a preferable embodiment, first nonreciprocal rotator 626 rotates by 45 degrees clockwise both the top and bottom components of light passing through it from first optical port 302 to second optical port 306. In another preferred embodiment, the relative directions of rotation imparted by first nonreciprocal rotator 626 and second nonreciprocal rotator 646 may be respectively reversed.

Upon exiting the first nonreciprocal rotators, the components enter first beam angle turners 630A-D. The first beam angle turners turn both polarization components towards the longitudinal axis of the circulator without changing their polarization orientation. The components then exit the first beam angle turner and transit complete gap 636. The components next pass through second beam angle turners 640A-D, which bends the components such that they are walk-off horizontally in the same direction -- towards the righthand side of optical circulator 900. The first and second beam angle turners and the complete gap are adjusted so as to achieve alignment of the components the with longitudinal axis of the second imaging element. Complete gap 636 is adjusted such that the beam walk-off across the gap is half of the adjacent port spacing. The components then enter second nonreciprocal rotator 646. In a preferable embodiment, second nonreciprocal rotator 646 rotates by 45 degrees clockwise both top and bottom components of light passing through it from first optical port 302 to second optical port 306. The component then pass through second beam displacer/combiner 350, where the beams are recombined. The recombined light beam then passes through fourth optical port 902 via second imaging element 372A.

FIGS. 10A-B show top and side isometric views of optical circulator 900. FIG. 10A shows a top isometric view of optical circulator 900, together with an internal ray trace, showing directions of the light rays within the circulator. FIG. 10B shows a side isometric view of optical circulator 900, together with an internal ray trace, showing directions of the light rays within the circulator. Optical circulator 900 as depicted in FIGS 10A-B has the same components, structure and operation as optical circulator 900 as depicted in FIG 9.

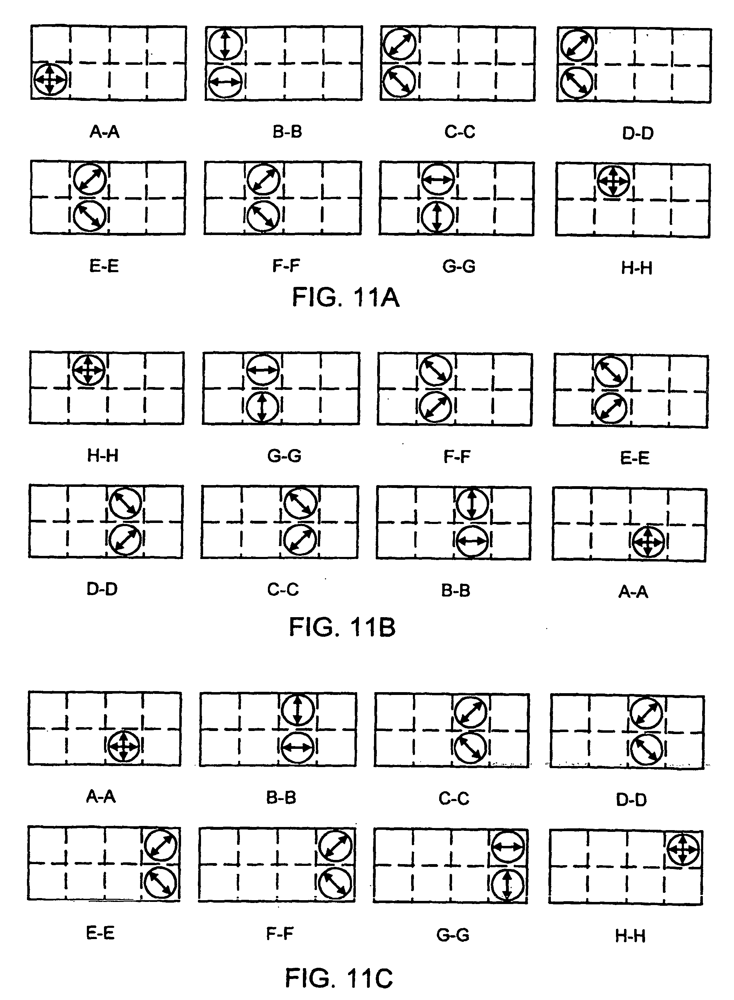

The operation of optical circulator 900 is illustrated in the cross sectional schematic representations shown in FIGS. 11A-C. FIGS. 11A-C illustrate the polarization states and spatial movement of unpolarized light entering at first optical port 302 that passes through to second optical port 306, with similar illustrations for unpolarized light entering second optical port 306 and passing through to third optical port 304. The changes in the polarization states and spatial movement have been discussed above in FIGS. 8A-B, and will not be discussed further here. FIG. 11C illustrates the polarization states and spatial movement of unpolarized light entering at third optical port 304 that passes through to fourth optical port 1102.

FIG. 11C shows how the two orthogonal components of unpolarized light entering at third optical port 304 are manipulated so as to arrive at fourth optical port 902. The two unpolarized orthogonal components are shown at cross section A-A, as they exit first imaging element 370B and enter first beam displacer/combiner 322. At cross-section B-B, upon exiting first beam displacer/combiner 322, the top component is shown as being walked off vertically from the bottom component. At cross-section C-C, upon exiting first nonreciprocal rotator 626, the polarization of the top and bottom component is shown as being rotated 45 degrees clockwise. At cross-section D-D, upon exiting first beam angle turners 630A-D, both of the components are unchanged in polarization orientation and spatial position, but their propagation directions are changed with respect to cross-section C-C such that they propagate in substantially the same direction. At cross-section E-E, upon traversing complete gap 1206, both the top and bottom components are shown as being walked off equidistantly in the same direction - to the right of the cross-section of the circulator. At cross-section F-F, upon exiting second beam angle turners 640A-D, both of the components are unchanged in polarization orientation and spatial position. Additionally, the propagation directions of both components are changed to be in alignment with the longitudinal axis of second imaging element 372. At cross-section G-G, upon exiting second nonreciprocal rotator 646, the polarization of both the top and bottom components is shown as being rotated 45 degrees clockwise. At cross-section H-H, upon exiting second beam displacer/combiner 350, the two components are recombined to exit at fourth optical port 902.

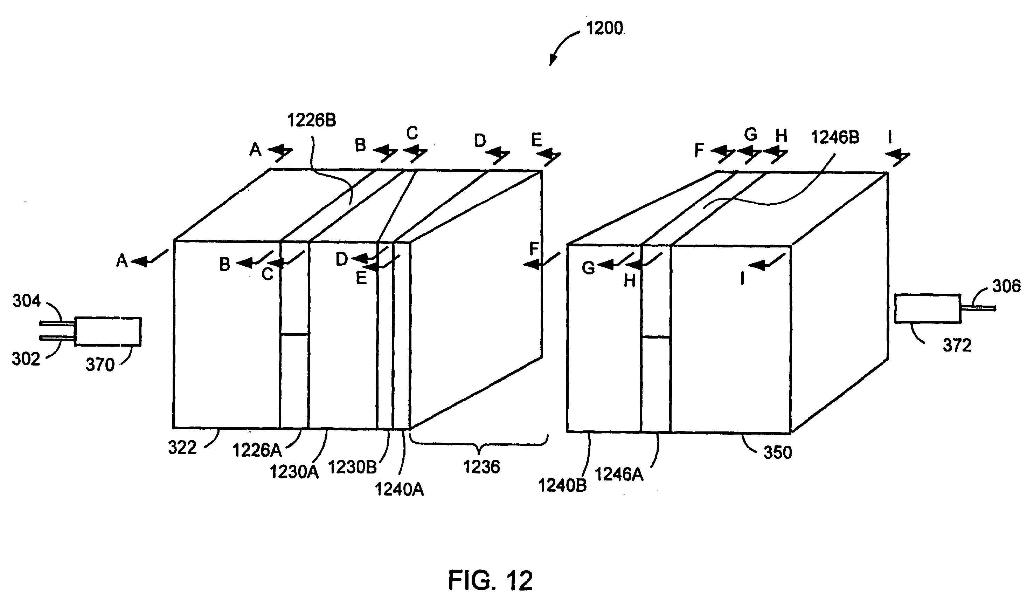

FIG. 12 shows an isometric view of optical circulator 1200, according to the invention. Optical circulator 1200 differs from the previously discussed inventive circulators in that complete gap 1236 is relocated from between the first beam angle turner and the second beam angle turner to being within the second beam angle turner 1240A-B. For example, in a preferable embodiment, a birefringent wedge pair split by a complete gap replaces a Wollaston, Rochon, or modified Wollaston or Rochon prism. In such an embodiment, the wedge pair may be formed of birefringent crystals with the optical axis of each birefringent wedge preferably parallel to one other. Such a structure differs from the wedge pair in a Wollaston, Rochon, or modified Wollaston or Rochon prism in the sense that the direction of the optical axis on each wedge in a Wollaston, Rochon, or modified Wollaston or Rochon prism is generally perpendicular to each other.

Such a preferable structure has the effect that, because the polarization direction of a beam traveling from first optical port 302 to second optical port 306 is perpendicular to that of a beam traveling from second optical port 306 to third optical port 304, the beams will experience different bending as they go through the birefringent wedge pair because of the birefringence in the wedge. In addition, the separation distance of the wedge pair may be adjusted to achieve desired forward and backward beam separation, as discussed generally above.

Optical circulator 1200 illustrates these features. Optical circulator 1200 includes first optical port 302, third optical port 304, second optical port 306, first imaging element 370, second imaging element 372, first beam displacer/combiner 322, first nonreciprocal rotators 1226A-B, first beam angle turners 1230A-B, second beam angle turners 1240A-B, complete gap 1236, second nonreciprocal rotators 1246A-B, and second beam displacer/combiner 350.

Optical circulator 1200 possesses a longitudinal axis, along which the various optical components are distributed, and a proximal and distal end. First optical port 302, and third optical port 304 are located at a proximal end, and second optical port 306 is located at a distal end of the optical circulator.

In preferable embodiments, the first, second, and third optical ports may comprise integrated optical circuits or optical fibers. First imaging element 370 may be preferably located on the optical path between the first and third optical ports and the first beam displacer/combiner. Second imaging element 372 may be preferably located on the optical path between second optical port 306 and second beam displacer/combiner 350. Such arrangements result in the first and third optical ports on the proximal side and the second optical port on the distal side being conjugate images of each other. In a preferable embodiment, the imaging element may be a collimating lens. In a more preferable embodiment, the collimating lens may be a Grin lens. Preferably, the Grin lens may be located at second optical port 306, as shown.

First beam displacer/combiner 322 is optically coupled distally to the first and third optical ports. In a preferable embodiment, the first beam displacer/combiner is a birefringent double refraction crystal. In a more preferable embodiment, the first beam displacer/combiner comprises Yttrium Orthovanadate, calcite, rutile or $\alpha$-BBO (barium borate). First nonreciprocal rotators 1226A-B comprise a nonreciprocal Faraday polarization rotator and are optically coupled distally from the first beam displacer/combiner. In a preferable embodiment, first nonreciprocal rotators 1226A-B comprise yttrium-iron-garnet (YIG), or Bi-added thick film crystals. The Bi-added thick film crystals comprise a combination of $(YbTbBi)_3Fe_5O_{12}$ and $(GdBi)_3(FeAlGa)_5O_{12}$, or of YIG and $Y_{3x}Bi_xFe_5O_{12}$. First beam angle turners 1230A-B comprise a pair of birefringent wedges, and are optically coupled distally to the first nonreciprocal rotators. First beam angle turners 1230A-B change the beam propagation direction depending upon the beam polarization orientation and traveling direction, as discussed generally above. There is a complete gap 1236, defined by second beam angle turner 1240A-B. The second beam angle turner 1240A and second beam angle turner 1240B are therefore spaced apart from one another, and separated by complete gap 1236. The location of the gap differs from previously discussed embodiments in that the wedge pair that served as a second beam angle turner in the previously discussed embodiments is completely separated by complete gap 1236 in this embodiment. Additionally, the optical axes of the wedge pair comprising second beam angle turner 1240A and second beam angle turner 1240B are substantially parallel to one another, in contrast to a Wollaston, Rochon, or modified Wollaston or Rochon prism, where the optical axes are perpendicular. The separation of the beams at cross-section E-E is proportional to the length of complete gap 1236. The relationship may described as $D \approx L * \theta$, where D is the beam separation distance, L is the length of complete gap 1236, and $\theta$ is the beam separation angle. Second nonreciprocal rotators 1246A-B comprise a nonreciprocal Faraday polarization rotator and are optically coupled distally from the second beam angle turners. In a preferable embodiment, the second nonreciprocal rotators comprise yttrium-iron-garnet (YIG), or Bi-added thick film crystals. The Bi-added thick film crystals comprise a combination of $(YbTbBi)_3Fe_5O_{12}$ and $(GdBi)_3(FeAlGa)_5O_{12}$, or of YIG and $Y_{3x}Bi_xFe_5O_{12}$. Second beam displacer/combiner 350 is optically coupled distally from the second nonreciprocal rotators and proximally from the second optical port.

In operation, unpolarized light passes through first optical port 302, to first imaging element 370, which it exits at a slight angle to the longitudinal axis of first imaging element 370. The unpolarized light then enters first beam displacer/combiner 322, which acts as a polarization sensitive beam displacement plate. The unpolarized light is decomposed into two orthogonal polarization components. Within the first beam displacer/combiner, the first component is an ordinary light ray (O-ray) and the other component is an extraordinary light ray (E-ray). The E-ray walks off vertically from the O-ray through the first beam displacer/combiner, with the result that there is a top and bottom component.

The components then enter first nonreciprocal rotators 1226A-B. In a preferable embodiment, first nonreciprocal rotator 1226A rotates the top component by 45 degrees clockwise and the bottom component by 45 degrees counterclockwise. In a preferred embodiment, the relative directions of rotation imparted by first nonreciprocal rotator 1226A and second nonreciprocal rotator 1246A, and by first nonreciprocal rotator 1226B and second nonreciprocal rotator 1246B, may be respectively reversed.

Upon exiting the first nonreciprocal rotators, both components have the same polarization orientation. They enter first beam angle turners 1230A-B, which turn both components parallel to the longitudinal axis of the circulator. Second beam angle turner 1240A will change the propagation direction of the both polarization components through a deviation angle. This deviation angle is determined by the wedge angle of the second beam angle turner 1240A and the index of refraction along the beam polarization in second beam angle turner 1240A. The components then exit second beam angle turner 1240A and transit complete gap 1236. The components next pass through second beam angle turner 1240B, which bends the components such that they are aligned with the axis of second imaging element 372. Viewing from the top of the circulator (as seen in FIG. 10A, discussed below), the axis of the second imaging element should be substantially parallel with the axis of the first imaging element to achieve circulation from second optical port 306 to third optical port 304. Complete gap 1236 is adjusted such a beam entering first optical port 302 can exit second optical port 306 and a beam entering second optical port 306 can exit third optical port 304. Both polarization components then enter second nonreciprocal rotators 1246A-B. In a preferable embodiment, second nonreciprocal rotator 1246A rotates the top component by 45 degrees and the bottom component by 45 degrees counterclockwise. The component then pass through second beam displacer/combiner 350, where the beams are recombined. The recombined light beam then passes through second optical port 306 via second imaging element 372. Unpolarized light entering second optical port 306 will travel along a different path from light traveling from first optical port 302 to second optical port 306. This is due to the non-reciprocity of first nonreciprocal rotator 1226A-B and second nonreciprocal rotator 1246A-B in combination with the beam angle turners, which are preferably polarization sensitive. The light ultimately exits at third optical port 304. This creates optical circulation.

In this embodiment, the displacement (walk-off) distance d3 of the light components is determined by the birefringence of the second beam angle turner 1240A-B, wedge angle of the second beam angle turner 1240A-B and the length of complete gap 1236 (indicated as d4) between second beam angle turner 1240A and second beam angle turner 1240B. For example, in the case of a $YVO_4$ wedge pair, assuming the c axis of $YVO_4$ is perpendicular to the longitudinal axis of the circulator, the displacement d3 can be expressed as

$$d_3 = \frac{1}{2} d_4 Sin2\theta \left( \frac{n_c}{\sqrt{1-(n_c Sin\theta)^2}} - \frac{n_a}{\sqrt{1-(n_a Sin\theta)^2}} \right)$$

where θ is the wedge angle of the second beam angle turner 1240A-B angle, $n_a$ and $n_c$ are the index of refraction of polarization along an a axis and c axis respectively, and d4 is the length of complete gap 1236. An advantage of using the preferable birefringent wedge pair that may be formed by second beam angle turners 1240A-B is that the walk-off distance can be adjusted by simply changing the distance between the wedges of the wedge pair, as discussed above. Further, a large walk-off distance can be achieved cost effectively without using long birefringent walk-off crystals

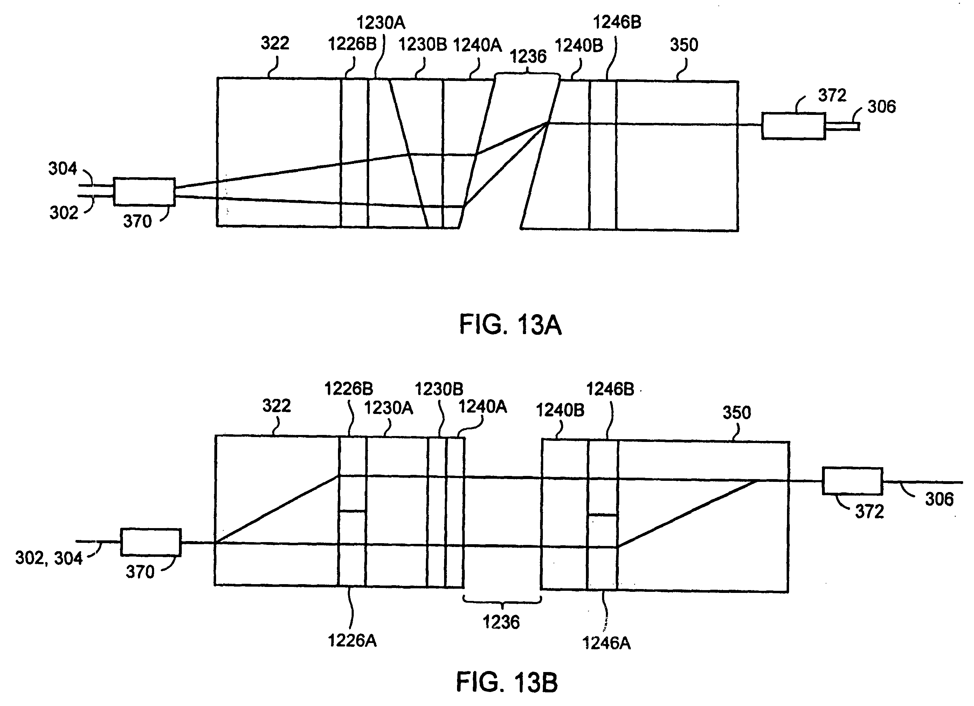

FIGS. 13A-B show top and side isometric views of optical circulator 1200. FIG. 13A shows a top isometric view of optical circulator 1200, together with an internal ray trace, showing directions of the light rays within the circulator. FIG. 13B shows a side isometric view of optical circulator 1200, together with an internal ray trace, showing directions of the light rays within the circulator. Optical circulator 1200 as depicted in FIGS 13A-B has the same components, structure and operation as optical circulator 1200 as depicted in FIG 12.

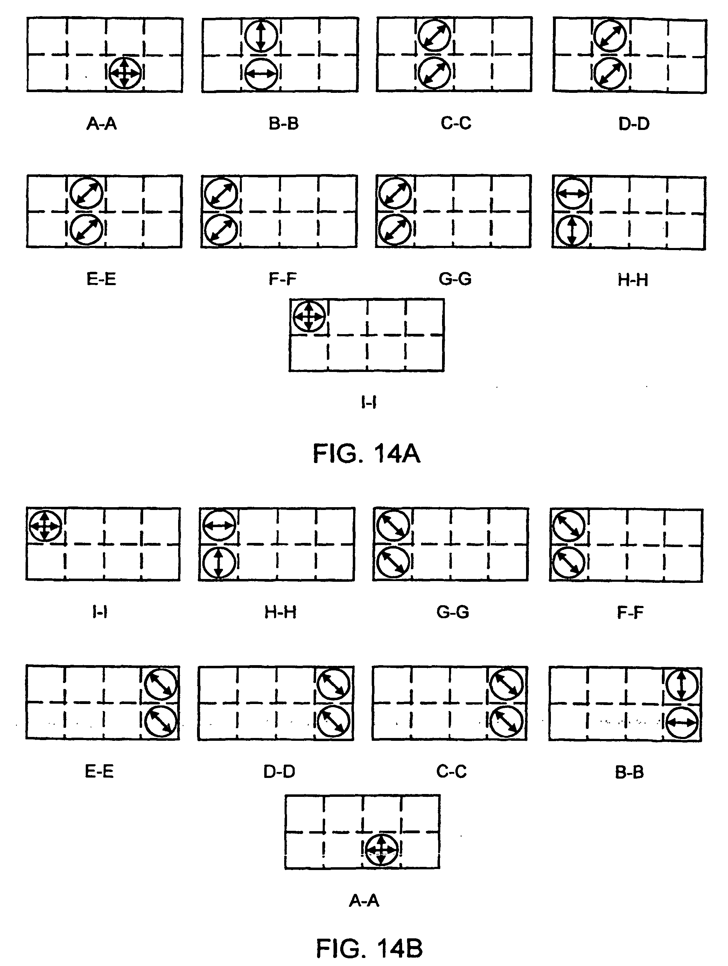

The operation of optical circulator 1200 is illustrated in the cross sectional schematic representations shown in FIGS. 14A-B. FIG. 14A shows how the two orthogonal components of unpolarized light entering at first optical port 302 are manipulated so as to arrive at second optical port 306. The two unpolarized orthogonal components are shown at cross section A-A, as they exit first imaging element 370 and enter the first beam displacer/combiner. At cross-section B-B, upon exiting the first beam displacer/combiner, the top component is shown as being walked off vertically from the bottom component. At cross-section C-C, upon exiting first nonreciprocal rotators 1226A-B, the polarization of the top components is shown as being rotated 45 degrees clockwise while the bottom component is shown as being rotated 45 degrees counter-clockwise. At cross-section D-D, upon exiting first beam angle turner 1230A-B, both of the components are unchanged in polarization orientation and spatial position. At cross-section E-E, upon exiting second beam angle turner 1240A, both of the components are unchanged in polarization orientation and spatial position. However, first beam angle turner 1230A-B and second beam angle turner 1240A change the propagation directions of the components from the directions that the components possessed at cross-section C-C. At cross-section F-F, upon traversing complete gap 1236, both the top and bottom components are shown as being walked off equidistantly in the same direction -- to the left of the cross-section of the circulator. At cross-section G-G, upon exiting second beam angle turner 1240B, both of the components are unchanged in polarization orientation and spatial position. However, the second beam angle turner 1240B changes the propagation direction of the components to be substantially in line with the axis of second imaging element 372. At cross-section H-H, upon exiting second nonreciprocal rotators 1246A-B, the polarization of the top component is shown as being rotated 45 degrees clockwise while the bottom component is shown as being rotated 45 degrees counter-clockwise. At cross-section I-I, upon exiting second beam displacer/combiner 350, the two components are recombined to exit at second optical port 306.

FIG. 14B shows how the two orthogonal components of unpolarized light entering at second optical port 306 are manipulated so as to arrive at third optical port 304. The two unpolarized orthogonal components are shown at cross section H-H as they enter the second beam displacer/combiner. At cross-section G-G, the bottom component is shown as being walked off vertically downward from the top component, thus creating a top and bottom component. At cross-section F-F, the polarization of the top component is shown as being rotated 45 degrees clockwise while the bottom component is shown as being rotated 45 degrees counter-clockwise. At cross-section E-E, both of the components are unchanged in polarization orientation and spatial position, but their propagation directions have been changed. At cross-section D-D, both the top and bottom components are shown as being walked off equidistantly in the same direction -- to the right of the cross-section of the circulator. At cross-section C-C, both of the components are unchanged in polarization orientation and spatial position, but their propagation directions have been changed to be substantially in alignment with third optical port 304. At cross-section B-B, the polarization of the top component is shown as being rotated 45 degrees clockwise while the bottom component is shown as being rotated 45 degrees counter-clockwise. At cross-section A-A, the two components are recombined to exit at third optical port 304.

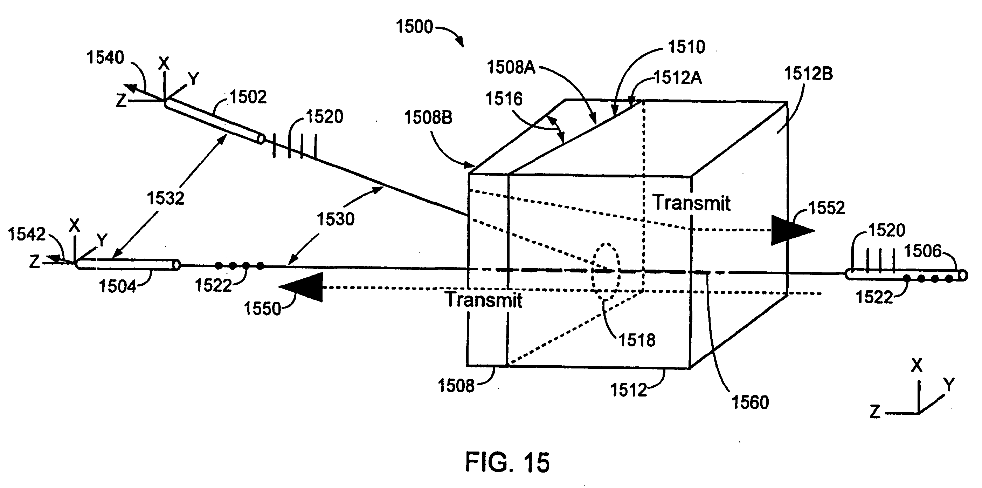

Fig. 15 shows an isometric view of a beam angle turner 1500 functioning as an alternative optical circulator outside the scope of the appended claims.

Orthogonally polarized beams 1550-1552 are differentially bent as they are transmitted through a center portion 1518 of the center plane 1510 of the prism pair 1508, 1512. The bending is polarization dependent.

The beam angle turner 1500 functions as an optical circulator by transmitting at divergent paths orthogonally polarized light beams 1550-1552. The optical circulator includes a first optical port 1502, a third optical port 1504, a second optical port 1506, and beam angle turner 1500. Beam angle turner includes birefringent wedges, i.e. prisms, 1508 and 1512. Each birefringent wedge may be fabricated from an anisotropic material with an optical axis. Each wedge includes opposing interior and exterior faces at an angle 1516 one to another. Wedge 1508 includes exterior face 1508B and interior face 1508A. Wedge 1512 includes exterior face 1512B and interior face 1512A.

Preferable beam angle turners may be based on Snell's law of refraction. Polarization sensitive angle turning is achieved by having a beam hit a birefringent crystal center plane at an acute angle as compared with a normal incidence angle in the case of birefringent walk-off crystals. Beams with different polarization vectors may experience different angles of refraction because of the difference in index of refraction in beam angle turner birefringent crystals. Further, the Poynting vector S and propagation vector K of either beam are substantially collinear with respect to one another. In alternate embodiments the beam angle turner comprises a Wollaston, Rochon, or modified Wollaston or Rochon prism, a Senarmont prism or other polarization dependent angle turning optical elements. These prisms produce separate beam pathways by refractive separation of a beams transmitted through the prism at polarization vector dependent angles. Conventional polarization beam splitter cubes by contrast, reflect one polarization state and transmits the other, orthogonally polarized, ray. By contrast as well, birefringent crystal spatially separate beams, through walk-off, i.e., the beams exit the crystal normal to the surface, and parallel to one another.

The various components of the optical circulator are distributed along the longitudinal axis 1560 from a proximal to a distal end. The longitudinal axis is parallel to the "Z" axis referenced in the figures. The longitudinal axis of the device is normal to opposing exterior faces 1508B, 1512B of prisms 1508, 1512. First optical port 1502, and third optical port 1504 are located at a proximal end, and second optical port 1506 is located at a distal end of the optical circulator. In the embodiment shown port 1506 is collinear with the longitudinal axis while ports 1502-1504 are positioned at respectively angles 1540-1542 with respect to the longitudinal axis. The opposing interior faces 1508A, 1512A of the prism pair mate to form an optically coupled center plane 1510 at an angle 1516 to the longitudinal axis of the device An air gap is not required between the opposing interior faces 1508A, 1512A, because the beam bending occurs during beam transmission through the optically coupled center plane 1510, rather than by transmission and reflection as is the case in prior art beam benders. In preferable embodiments, the first, second, and third optical ports may comprise integrated optical circuits or optical fibers or TEC fibers.

In operation, a beam 1552 with polarization vector 1520 emanates from first optical port 1502 and enters beam angle turner through face 1508B at a slight angle to the longitudinal axis. The beam is targeted toward the center portion 1518 of the center plane 1510. The beam is transmitted through the center portion and is bent toward the longitudinal axis of the circulator. At all times during the bending the Poynting and propagation vectors of the beam are collinear. The primary bending of the light passing through beam angle turner 1500 occurs at interface 1510. The beam propagation direction depending upon the beam polarization orientation and traveling direction. The beam then passes through the second prism 1512 where any distortions of the beam shape brought about in the first prism 1508 are compensated. The beam 1552 then exits the beam angle turner and passes to the second optical port 1506. The polarization vector 1522 of beam 1550 is orthogonal the polarization vector 1520 of beam 1552. Thus they are differentially bent in the circulator. Beam 1550 with polarization vector 1522 emanates from second optical port 1506 and enters beam angle turner through face 1512B collinear with the longitudinal axis 1560. The beam is targeted toward the center portion 1518 of the center plane 1510. The beam is transmitted through the center portion and may be bent away from the longitudinal axis of the circulator. At all times points on the propagation path the Poynting and propagation vectors of the beam are collinear. The beam then passes through the second prism 1508 where distortions of the beam shape brought about in the first prism 1512 are compensated. The beam 1550 then exits the beam angle turner and passes to the third optical port 1504. In an alternate embodiment the beam bender comprises a single prism, e.g. 1508, rather than a prism pair.

Because beams 1550-1552 have orthogonal polarization vectors the light entering first optical port 1502 will travel along a different optical path towards third optical port 1504. This creates optical circulation. Beams 1550-1552 diverge one from another at a divergence angle 1530 that may be on the order of 1-15 degrees. This angle and the distance of the ports 1502-1504 from the center portion 1518 determines the spacing of the ports 1532, and the rectangular form factor of the circulator.

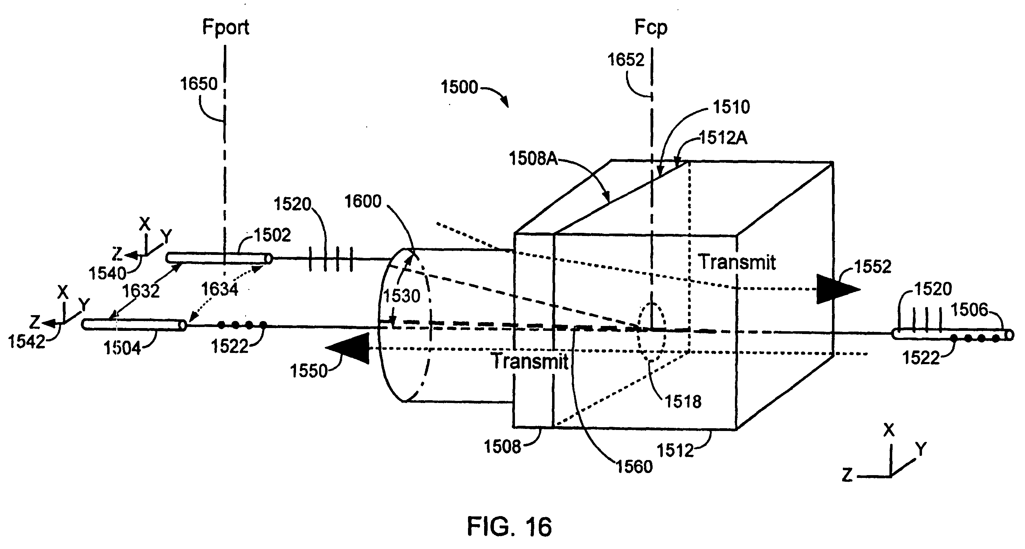

FIG. 16 shows an isometric view of an alternate embodiment of the optical circulator of FIG. 15 with an imaging element 1600 for bending, focusing and collimating light beams 1550-1552. The lens is centered along the longitudinal axis 1560. In the embodiment shown the lens has a graded index of refraction (GRIN). The focal planes 1650-1652 of the lens are respectively proximate the center portion 1518 of the center plane 1510 and at the focal arc 1634 which includes both ports 1502-1504. The lens will bend incoming light 1552 from port 1502 to intersect the focal point 1652 at the center plane of the center plane 1508,1512 and collimates that beam. As to an outgoing beam, e.g. beam 1550 emanating from center portion 1518, the lens bends the beam to be parallel to the longitudinal axis 1560 and focusses the beam on port 1504. Whereas the prism is a polarization sensitive device, the lenses are polarization insensitive, bending light beams by an amount proportionate to their radial displacement from the longitudinal axis to intersect the center portion of the wedge face. Although the divergence angle 1530 of beams 1550-1552 is identical to that shown in FIG. 15, the separation distance 1632 of ports 1502-1504 is significantly less than the spacing of the ports 1502-1504 shown in FIG. 15. This reduction in port spacing is a result of the bending and collimation of beams 1550-1552 by the imaging element 1600. Additionally, because beams 1550-1552 are parallel to each other and to the longitudinal axis 1560, ports 1502-1504 are also parallel to one another and to the longitudinal axis, thus simplifying their alignment. No complex angulation of ports is required to target their beams on the center portion. Instead a imaging element 1600 performs this function for both beams. Because each beam is collimated and focussed the rectangular form factor of the optical circulator is reduced from that possible without the lens because of the reduction of the distance 1632 between ports brought about by the lens. In an alternate embodiment an additional lens may be positioned between port 1506 and the beam bender 1508, 1512 to focus beam 1552 on port 1506.

Prior art circulators position an individual lens with a diameter of approximately 1.800 mm at the end of each optic fiber which itself is approximately 0.125 mm in diameter. The lenses collimate the beams from each fiber. Minimum port spacing is determined by the diameter of each lens rather than the diameter of the optic fiber. By contrast, in an embodiment shown in FIG. 16, two or more ports, e.g. 1502-1504 share a single lens. Thus each port no longer requires an individual lens and the ports may be located closer to one another.

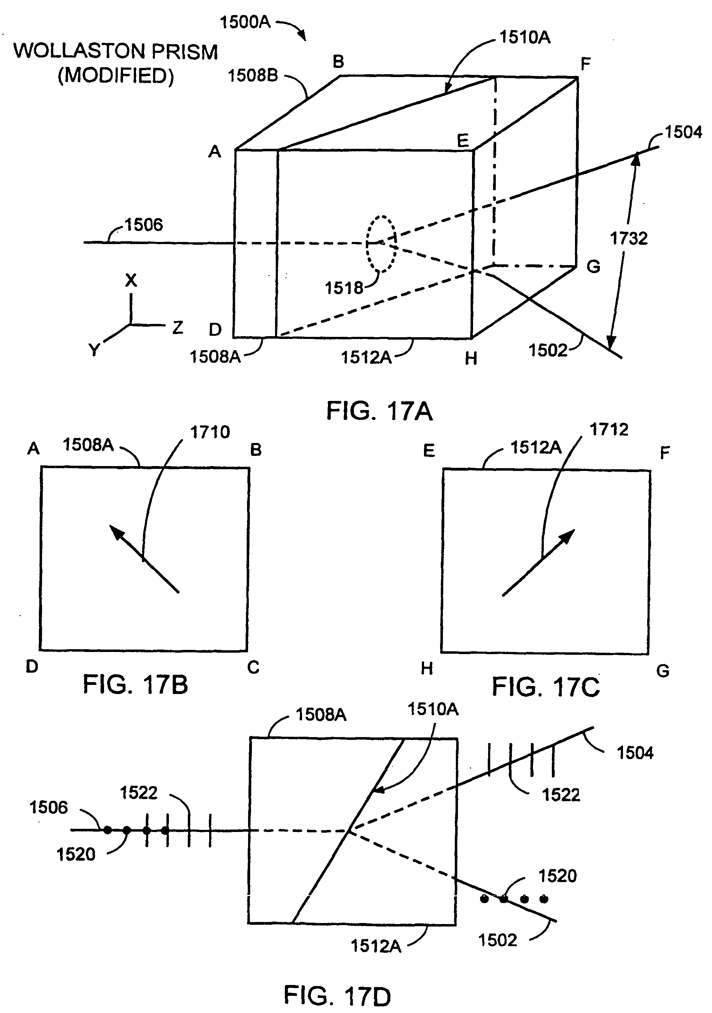

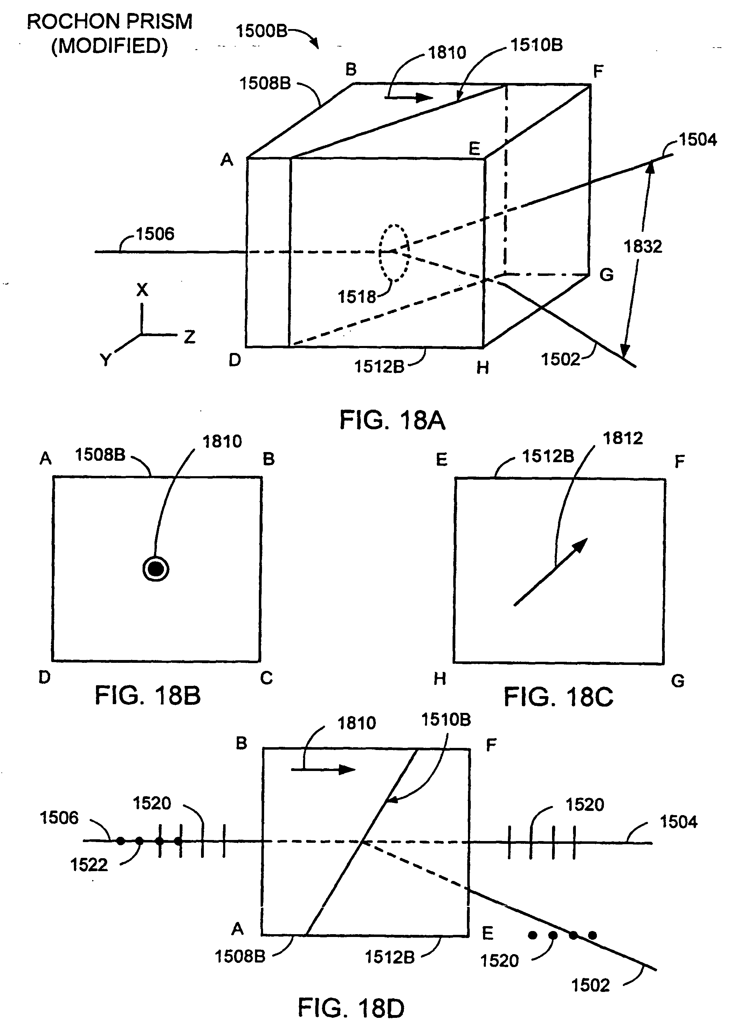

FIGS. 17A-D, 18A-D show alternate embodiments, i.e. modified Wollaston and Rochon prisms, of the optical circulator of FIG. 15. Conventional Wollaston prisms are formed by two birefringent wedges. In such prisms, the optical axes of each birefringent wedge are substantially perpendicular to one another and one of the optical axes is perpendicular to the direction of wedge interface. Conventional Wollaston and Rochon prisms are discussed further in Hecht, *Optics* 292 & 329 (1987) (2d. ed. Addison-Wesley). The modified Rochon or Wollaston prism differs from a conventional Rochon or Wollaston prism in the orientation of the optical axes of its wedges. In a modified Rochon prism, the optical axis of one of the wedges is oriented normal to the first interface, which is the same as in a conventional Rochon prism. However, the optical axis in the other wedge is oriented 45 degrees in the second interface (the second interface being parallel to the first interface and at the opposite end of the modified Rochon prism) with respect to the optical axis orientation the wedge would possess in a conventional Rochon prism. Similarly, in a modified Wollaston prism, the optical axis of each of its birefringent wedges are oriented perpendicularly to each other and 45 degrees in a plane that is normal to the normal incidence direction with respect to the optical axis in a conventional Wollaston prism.

FIGS. 17A-D show a modified Wollaston prism 1500A, having birefringent wedges 1508, 1512. The optic axes of each birefringent wedge 1508, 1512 are perpendicular to one another. However, as shown in FIGS. 17B-C the optic axis of each of the wedges has been rotated 45 degrees with respect to that of a conventional Wollaston prism. FIGS. 17B-C show two cross sections through modified Wollaston prism 1500A, labeled as ABCD and EFGH. The optical axis 1710 of birefringent wedge 1508A and the optical axis 1712 of birefringent wedge 1512A are shown, as orthogonal diagonals respectively, CA and HF, of each wedge. In conventional Wollaston prisms, the optical axis of birefringent wedge 1508A would be parallel to AD and perpendicular to the optical axis of birefringent wedge 1512A which would be parallel to EF.

As shown in FIG. 17D, a light beam from port 1502 with a polarization vector 1520 is shown entering the modified Wollaston prism through wedge 1512A, bending through the center portion 1518 of the center plane 1510A and exiting prism 1508A on a path toward port 1506. A light beam from port 1506 with a polarization vector 1522 is shown entering the modified Wollaston prism normal to the face ABCD of wedge 1508A. Polarization vector 1520 is oriented along BD perpendicular to the optic axis 1710 of wedge 1508A and parallel to the optic axis 1712 of wedge 1512A. Polarization vector 1522 is oriented along HF parallel to the optic axis 1712 of wedge 1512A and perpendicular to the optic axis 1710 of wedge 1508A.

As the beam from port 1506 enters the prism normal to face ABCD no beam bending occurs. That beam propagates through birefringent wedge 1508A and arrive at the center plane 1510A at an acute incidence angle, normally the wedge angle. The beam bends through the center portion 1518 of the center plane 1510A and exits prism 1512A on a path toward port 1504. The beam from port 1502 enters the prism at an angle to face EFGH. Beam bending occurs as the beam propagates through wedge 1512A to center plane 1510A at which further bending occurs orienting the beam toward port 1506. Because the indices of refraction of the orthogonally polarized 1520-1522 beams are different, according to Snell's law of refraction, polarization sensitive angle turning results at the center portion 1518 of center plane 1510A. Additional angle turning and beam separation will occur as the beams exit the beam bender. The polarization sensitive beam bending and the distance of ports 1502-1504 from the beam bender determines the separation 1732 between ports. During this entire process, the Poynting vector S and the propagation vector K are substantially collinear, with the walk-off angle between S and K being preferably less than or approximately equal to $\pm 1°$.

FIG. 18A-D show a modified Rochon prism. Like the Wollaston prism, the Rochon prism is also formed by two birefringent wedges. In a conventional Rochon prism, the optic axis of each birefringent wedge are perpendicular to one another, and one of the optic axes is substantially parallel to the propagation direction of light. In the modified Rochon prism as shown in FIGS. 18B the optical axis 1810 of wedge 1508B is along the direction of the light beam from port 1506, and normal to cross-section ABCD just as in a conventional Rochon prism. FIG. 18C shows the optical axis 1812 of wedge 1512B which is oriented on the diagonal HF of cross-section EFGH. The optical axis 1812 of birefringent wedge 1512B is perpendicular to optical axis 1810 in the wedge 1508B. In a conventional Rochon prism, optical axis 1812 would be parallel to EH.

In a Rochon prism beams with orthogonal polarization vectors pass through one wedge, e.g., wedge 1508B, on a path collinear with the optic axis of that wedge. The index of refraction with respect to each beam is the same since the propagation direction is along the optic axis. At the center portion 1518 of the center plane 1510B, according to Snell's law of refraction, the orthogonally polarized 1520-1522 beams will exhibit polarization sensitive angle. Additional angle turning and beam separation will occur as the beams exit the beam bender. The polarization sensitive beam bending and the distance of ports 1502-1504 from the beam bender determines the separation 1832 between ports. During this entire process, the Poynting vector S and the propagation vector K are substantially collinear, with the walk-off angle between S and K being preferably less than or approximately equal to $\pm\,1°$.

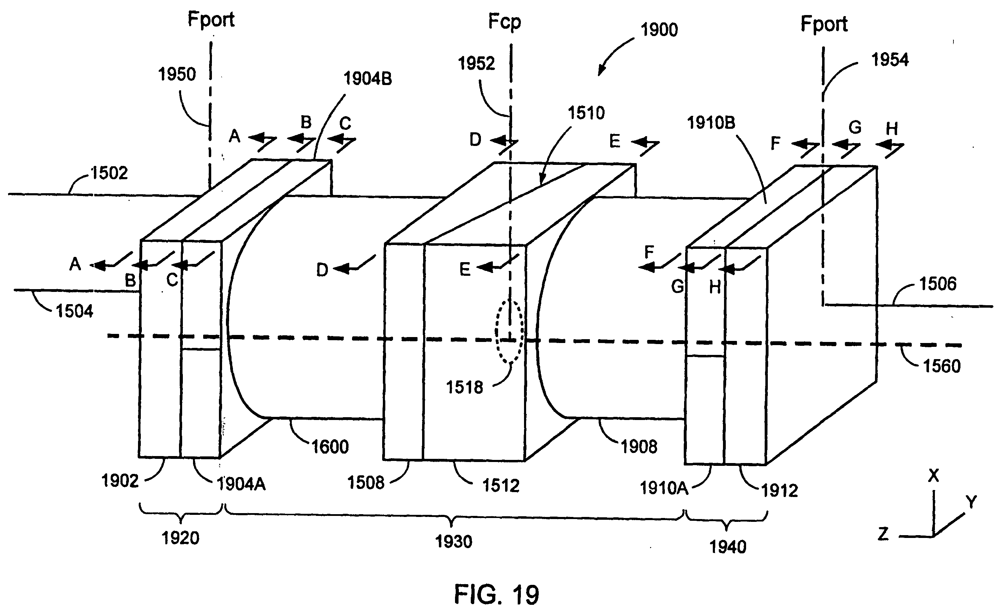

An advantage of using such modified prisms as beam angle turners is that the use of an additional waveplate may be avoided, because the polarization vector of the incoming light beam falls into either orthogonal or parallel alignment with the optic axis of the modified prism. Additional waveplates increases system complexity and leads to narrower operating wavelength bandwidth. FIG. 19 shows a side isometric view of an embodiment of an polarization insensitive optical circulator.

The addition of end portions with beam displacer combiners and non-reciprocal rotators provides for polarization of normal light beams that varies depending on the propagation direction of the incoming light beam. This allows circulators to be built which circulate normal light with random polarization orientation and arbitrary degrees of polarization. Optical circulator 1900 includes: first optical port 1502, third optical port 1504, second optical port 1506, first end portion 1920, center portion 1930, and second end portion 1940. First end portion 1920 includes first beam displacer/combiner 1902 and first nonreciprocal rotators 1904A-B. Center portion 1930 includes first imaging element 1640, beam angle turner 1508, 1512, and second imaging element 1908. Second end portion 1940 includes second nonreciprocal rotators 1910A-B, and second beam displacer/combiner 1912.

The components of the optical circulator 1900 are laid out along a longitudinal axis 1560. First end portion 1920 is optically coupled distally to the first and third optical ports, and is located in an opposing relationship to second end portion 1940. First beam displacer/combiner 1902 is optically coupled distally to the first and third optical ports 1502 and 1504. In a preferable embodiment, first beam displacer/combiner 1902 is a birefringent crystal. In a more preferable embodiment, first beam displacer/combiner 1902 comprises Yttrium Orthovanadate, calcite, rutile or a-BBO (barium borate). First nonreciprocal rotators 1904A-B comprise nonreciprocal Faraday polarization rotators and are optically coupled distally from first beam displacer/combiner 1902. In a preferable embodiment, first nonreciprocal rotators 1904A-B comprise yttrium-iron-garnet (YIG), or Bi-added thick film crystals. The Bi-added thick film crystals preferably comprise a combination of $(BiTb)_3(FeGa)_5O_{12}$, $(YbTbBi)_3Fe_5O_{12}$ and $(GdBi)_3(FeAlGa)_5O_{12}$, or of YIG and $Y_{3x}Bi_xFe_5O_{12}$.

Optically coupled distally to first end portion 1920 is center portion 1930. Included in center portion 1930 is imaging element 1600. Imaging element 1600 is optically coupled distally to first nonreciprocal rotators 1904A-B. Beam angle turner 1508, 1512 is optically coupled to imaging element 1600 distally along the horizontal axis. Beam angle turner 1508, 1512 is shown as a modified Wollaston prism, as described above. Imaging element 1908 is optically coupled distally to beam angle turner 1508, 1512. The embodiment in FIG. 19 does not require reciprocal rotators because the optic axis of the modified Wollaston prism are aligned either orthogonal or parallel to the polarization vectors of the incoming light beams.

Optically coupled distally to center portion 1930, second nonreciprocal rotators 1910A-B are included in center portion 1930, and are optically coupled to beam angle turner 1508, 1512. Second nonreciprocal rotators 1910A-B comprise a nonreciprocal Faraday polarization rotator. In a preferable embodiment, the second nonreciprocal rotators comprise yttrium-iron-garnet (YIG), or Bi-added thick film crystals. The Bi-added thick film crystals preferably comprise a combination of $(YbTbBi)_3Fe_5O_{12}$ and $(GdBi)_3(FeAlGa)_5O_{12}$, or of YIG and $Y_{3x}Bi_xFe_5O_{12}$. Second beam displacer/combiner 1912 is optically coupled distally from second nonreciprocal rotators 1910A-B and proximally from second optical port 1506.

Each of the imaging elements 1600, 1908 has a common focal point 1952 at the center portion 1518 of the center plane 1510 of the beam angle turner 1508, 1512. The longitudinal axis 1560 passes through the center portion and intersects the center plane at an acute angle. Each imaging element also has a focal point at a corresponding end of the optical circulator. Imaging element 1600 has a focal point 1950 at the focal plane which includes ports 1502-1504. Imaging element 1908 has a focal point at the focal plane 1954 which includes port 1506.

In operation, unpolarized or randomly polarized light from first optical port 1502 enters first beam displacer/combiner 1902, which acts as a polarization sensitive beam displacement plate. The unpolarized light is decomposed into two rays with orthogonal polarization vectors. Within first beam displacer/combiner 1902, the first ray is an ordinary light ray (O-ray) and the other ray is an extraordinary light ray (E-ray). The E-ray walks off vertically from the O-ray through first beam displacer/combiner 1902, with the result that there is a top and bottom ray, relative to the "X" axis.

The rays then enter first nonreciprocal rotators 1904A-B. In a preferable embodiment, first nonreciprocal rotator 1904A rotates by 45 degrees clockwise a ray of light passing through it from first optical port 1502 to second optical port 1506. In another preferable embodiment, first nonreciprocal rotator 1904B rotates by 45 degrees counter-clockwise a ray of light passing through it from first optical port 1502 to second optical port 1506. In another preferred embodiment, the relative directions of rotation imparted by first nonreciprocal rotator 1904A and second nonreciprocal rotator 1910A, and by first nonreciprocal rotator 1904B and second nonreciprocal rotator 1910B, may be respectively reversed so that any light rays passing through the circulator in either propagation direction will experience both counterclockwise and clockwise rotation thus avoiding polarization mode dispersion (PMD).

Upon exiting first nonreciprocal rotators 1904A-B, both rays have the same polarization orientation before entering first imaging element 1600. Imaging element 1600 bends distally propagating light from either port 1502/1504 to intersect center portion 1518 and collimates those beams in the process. Additionally, the lens bends proximally propagating light emanating from the center portion to a path parallel to the longitudinal axis and focusses that light on a respective one of ports 1502-1504. Imaging element 1908 performs a symmetrical function bending proximally propagating light from port 1506 to intersect center portion 1518 and collimates those beams in the process. Additionally, imaging element 1908 bends distally propagating light emanating from the center portion to a path parallel to the longitudinal axis and focusses that light on port 1506. In an embodiment the imaging elements 1600, 1908 may alternately comprise one or more collimating lenses and prisms in series to collimate and bend the light. The lenses may have uniform index of refraction or may be fabricated with a graded index of refraction. In the embodiment shown in FIG. 19 the lenses are fabricated with graded indices of refraction, e.g. GRIN lenses.

Both distally propagating rays then enter beam angle turners 1508, 1512. Beam angle turners bend both rays in an amount proportionate to their polarization vector. The rays then exit the beam angle turner and transit through second imaging element 1908. Second imaging element 1908 serves to collimate the distally propagating rays.

The rays then enter second nonreciprocal rotators 1910A-B. In a preferable embodiment, second nonreciprocal rotator 1910A rotates by 45 degrees counterclockwise a polarized ray of light passing through it from first optical port 1502 to second optical port 1506. In another preferable embodiment, second nonreciprocal rotator 1910B rotates by 45 degrees clockwise a polarized ray of light passing through it from first optical port 1502 to second optical port 1506. The rays then pass through second beam displacer/combiner 1912, where the beams are recombined. The recombined light beam then passes through second optical port 1506. Unpolarized light emanating from second optical port 1506 will travel in the opposite direction. Second nonreciprocal rotators 1910A-B will direct light along a different optical path towards third optical port 1504. This creates optical circulation.

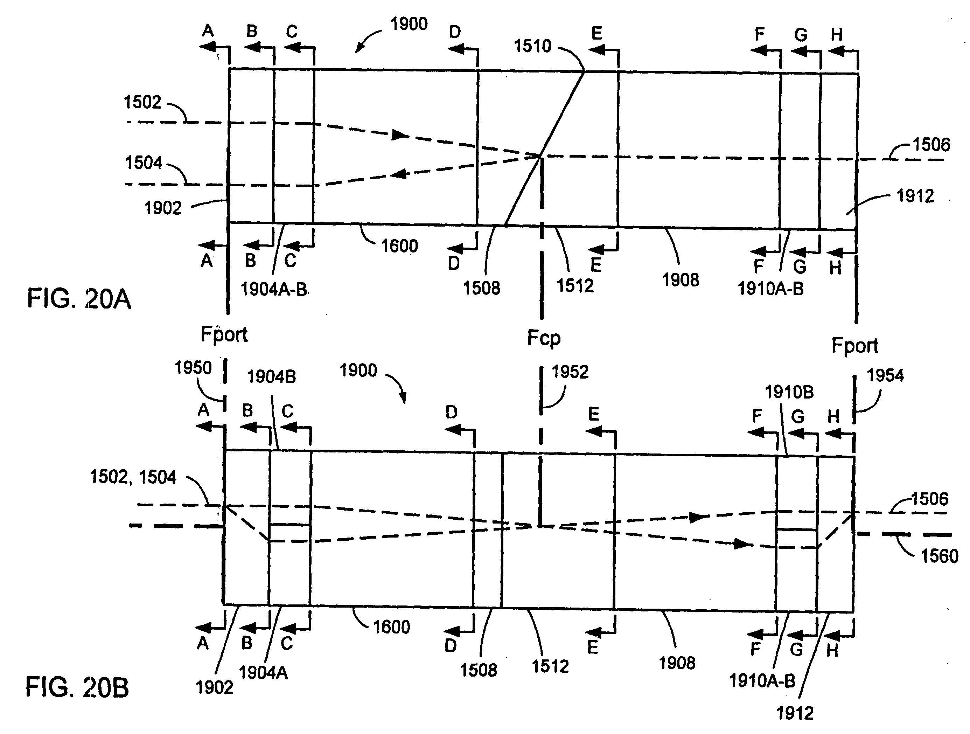

FIGS. 20A-B show top and side views of optical circulator 1900. FIG. 20A shows a top view of optical circulator 1900, together with an internal ray trace, showing directions of the light rays within the circulator. FIG. 20B shows a side view of optical circulator 1900, together with an internal ray trace, showing directions of the light rays within the circulator. Optical circulator 1900 as depicted in FIGS 20A-B has the same components, structure and operation as optical circulator 1900 as depicted in FIG 19.

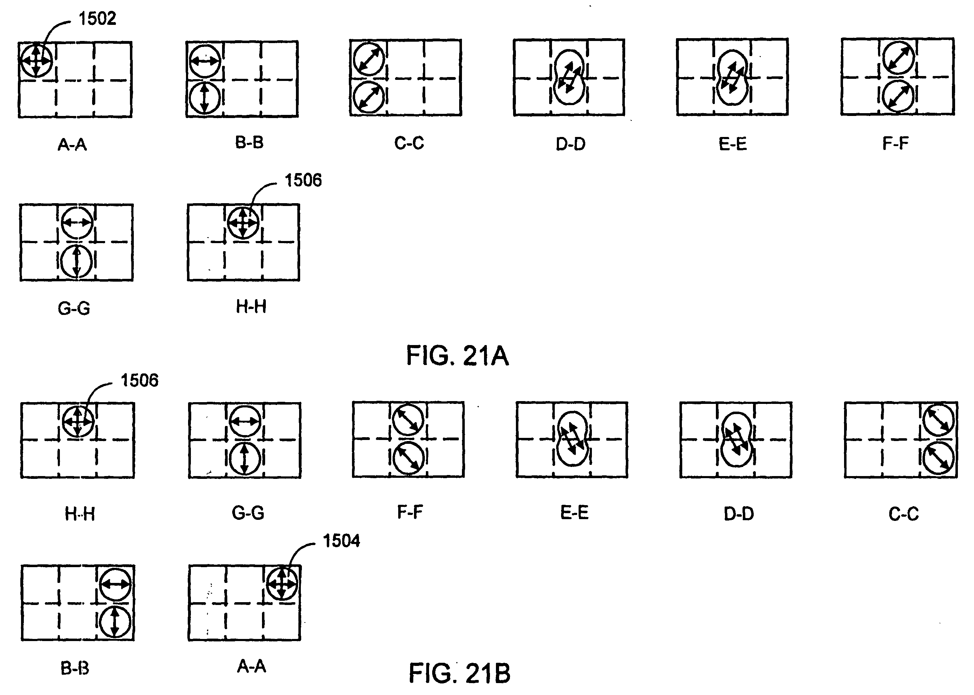

The operation of optical circulator 1900 is illustrated in the cross sectional schematic representations shown in FIGS. 21A-B. FIG. 21A shows how a beam of normal light entering at first optical port 1502 is split into rays with orthogonal polarization vectors so as to arrive at second optical port 1506. The unpolarized beam is shown at cross section A-A, entering the first beam displacer/combiner 1902. At cross-section B-B, upon exiting first beam displacer/combiner 1902, a ray with a vertical polarization vector is shown as being walked off vertically from the top ray with a horizontal polarization vector. At cross-section C-C, upon exiting first nonreciprocal rotators 1904A-B, the polarization of the top ray is shown as being rotated 45 degrees counter-clockwise while the bottom ray is shown as being rotated 45 degrees clockwise. At cross-section D-D, upon entering the beam angle turner, both of the rays are unchanged in polarization orientation, but have changed their spatial location. At cross-section E-E, upon exiting beam angle turner 1508, 1512 the propagation directions of the rays is changed from the directions that the rays possessed at cross-section D-D. At cross-section F-F, after passing through second imaging element 1908, the rays have been spatially separated. At cross-section G-G, upon exiting second nonreciprocal rotators 1910A-B, the polarization of the top ray is shown as being rotated 45 degrees clockwise while the bottom ray is shown as being rotated 45 degrees counterclockwise. At cross-section H-H, upon exiting second beam displacer/combiner 1912, the two rays are recombined to exit at second optical port 1506.

FIG. 21B shows how a beam of light entering the circulator from the second optical port is manipulated so as to arrive at third optical port 1504. Cross-section H-H shows the beam entering the second beam displacer/combiner 1912. At cross-section G-G, a ray with a vertical polarization vector is shown as being walked off vertically downward from a top ray with a horizontal polarization vector, thus creating a top and bottom ray. At cross-section F-F, the polarization of the top ray is shown as being rotated 45 degrees clockwise while the bottom ray is shown as being rotated 45 degrees counter-clockwise. Both polarized rays traveling from second optical port 1506 to third optical port 1504 are now in the same polarization orientation. The rays are also perpendicular to the polarized rays traveling from first optical port 1502 to second optical port 1506. The orthogonal polarization orientation is due to the non-reciprocity of second nonreciprocal rotators 1910A-B. At cross-section E-E, both of the rays are unchanged in polarization orientation but their propagation directions and spatial locations within the cross-section have been changed. Additionally, the beam path of the polarized rays traveling from second optical port 1506 to third optical port 1504 is different from the polarization of the rays traveling from first optical port 1502 to second optical port 1506 because the polarization orientations of the two sets of rays are perpendicular to each other as they travel through beam angle turner 1508, 1512. At cross-section D-D, upon exiting beam angle turner 1508, 1512, the propagation directions of the rays is changed from the directions that the rays possessed at cross-section D-D. At cross-section C-C, both of the rays are unchanged in polarization orientation but their propagation directions and spatial locations within the cross-section have been changed. At cross-section B-B, the polarization of the top ray is shown as being rotated 45 degrees clockwise while the bottom ray is shown as being rotated 45 degrees counter-clockwise. At cross-section A-A, the two rays are recombined to exit at third optical port 1504.

As is evident in cross-sections A-A and C-C of FIGS. 21A-B, an effect of the components of the first end portion 1920 and a second end portion 1940 is to impart to light coming into the circulator a polarization vector which depends on the propagation direction of the beam or rays. Conversely, these same elements in the embodiment shown also serve to combine any rays generated internally within the circulator from a single incoming beam to form a single outgoing beam.

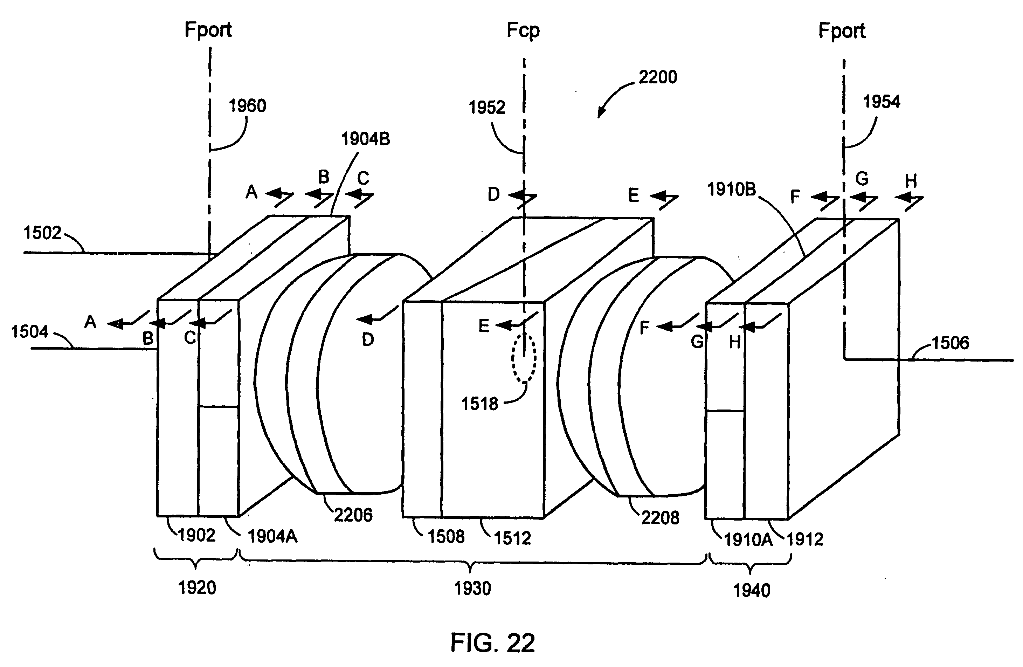

FIG. 22 shows a side isometric view of optical circulator 2200. Optical circulator 2200 has the same components, structure and operation as optical circulator 1900 as depicted in FIG. 19 except with respect to first imaging element 2206 and second imaging element 2208. In optical circulator 2200, first imaging element 2206 and second imaging element 2208 are depicted as constant gradient, double convex lenses. This is in contrast to the circulator embodiment shown in FIG. 19, wherein the imaging elements were gradient index, or GRIN, lenses. In general, the first or second imaging elements may be, but are not limited to, double convex lenses, plano-convex lenses, aspherical lenses, or graded index of refraction (GRIN) lenses. Equivalent lens or optical element structures may also be substituted, as suggested above with the replacement of the GRIN lenses with collimating lenses and prisms in series.

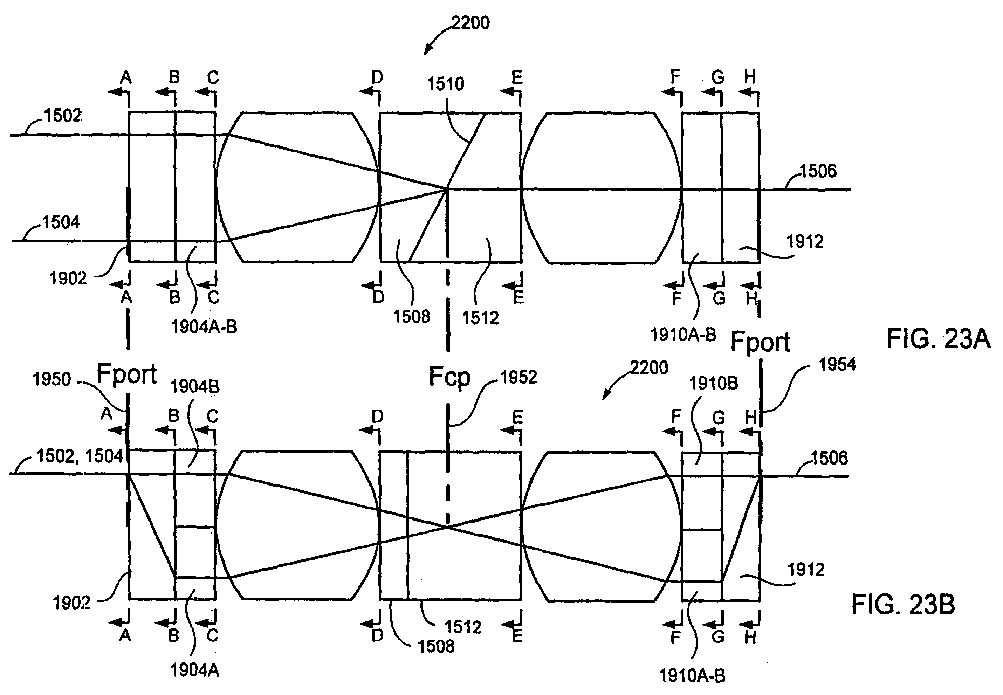

FIGS. 23A-B show top and side isometric views of optical circulator 2200. FIG. 23A shows a top isometric view of optical circulator 2200, together with an internal ray trace, showing directions of the light rays within the circulator. FIG. 23B shows a side isometric view of optical circulator 2200, together with an internal ray trace, showing directions of the light rays within the circulator. Optical circulator 2200 as depicted in FIGS 23A-B has the same components, structure and operation as optical circulator 2200 as depicted in FIG 22.

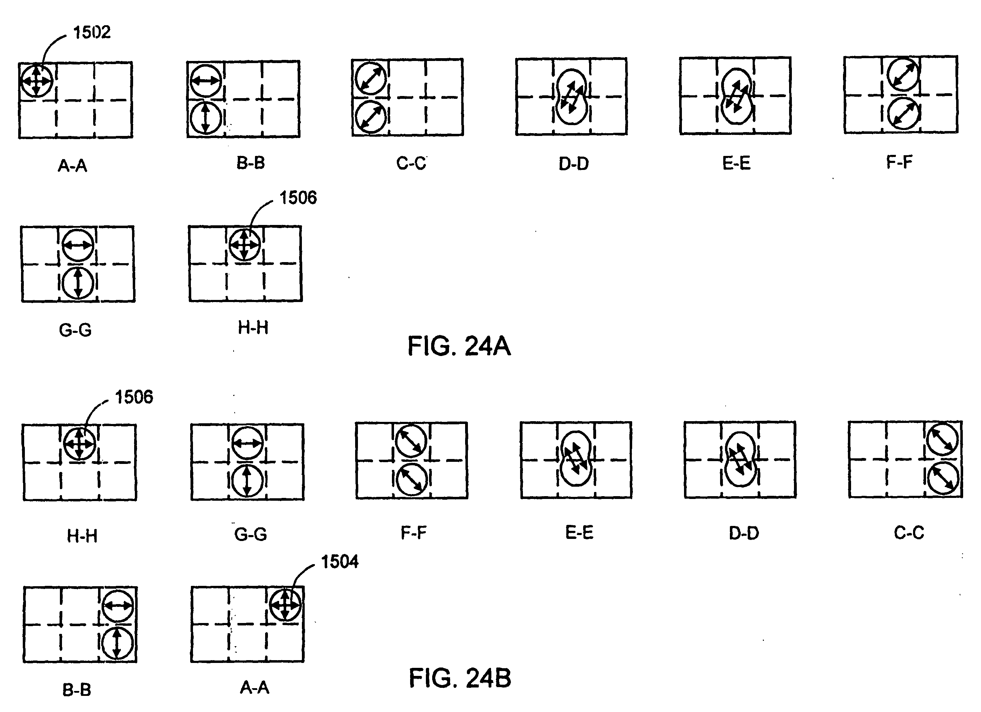

The operation of optical circulator 2200 is illustrated in the cross sectional schematic representations shown in FIGS. 24A-B. FIG. 24A shows how the light beam entering at first optical port 1502 is manipulated so as to arrive at second optical port 1506. FIG. 24B shows how the beam of unpolarized light entering at second optical port 1506 is manipulated so as to arrive at third optical port 1504. In other respects, the operational description of FIGS. 24A-B is identical to the operational description of FIGS. 21A-B.

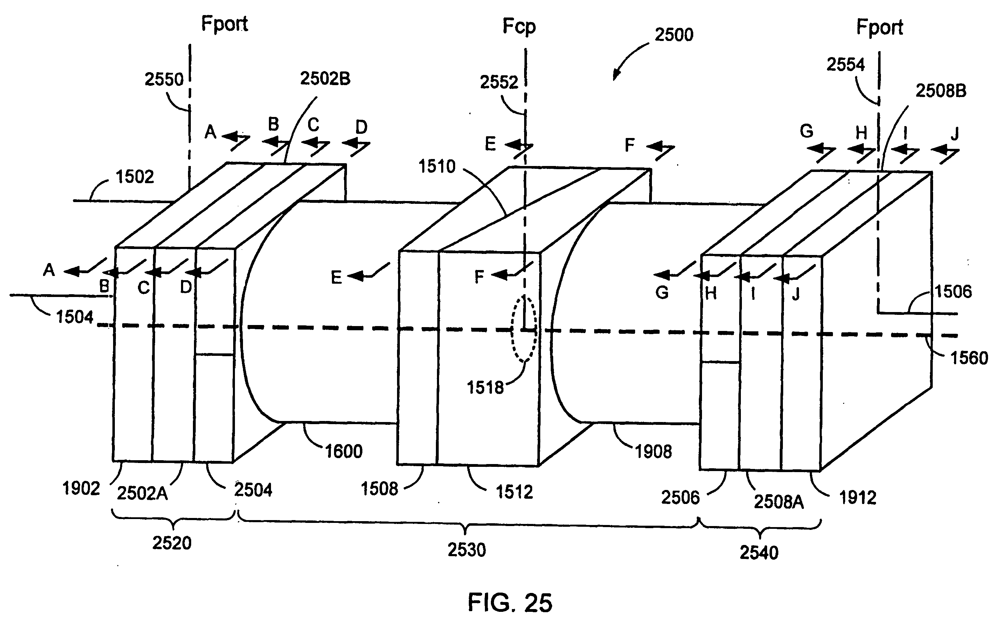

FIG. 25 shows an isometric view of an alternate embodiment of the optical circulator including graded index of refraction lens elements and non-reciprocal and reciprocal rotators. In comparison with the embodiment shown in FIG. 19, optical circulator 2500 uses only one Faraday non-reciprocal rotator on each side of the circulator instead of a split pair. Shown is optical circulator 2500, including first optical port 1502, third optical port 1504, second optical port 1506, first end portion 2520, center portion 2530, and second end portion 2540. First end portion 2520 includes first beam displacer/combiner 1902, first reciprocal rotators 2502A-B, and first nonreciprocal rotator 2504. Center portion 2530 includes first imaging element 1600, beam angle turner 1508, 1512 (which is a conventional Wollaston prism), and second imaging element 1908. Second end portion 2540 includes second nonreciprocal rotator 2506, second reciprocal rotators 2508A-B, and second beam displacer/combiner 1912. First end portion 1920 is optically coupled distally to the first and third optical ports, and is located in an opposing relationship to second end portion 2540. First beam displacer/combiner 1902 is optically coupled distally to the first and third optical ports 1502 and 1504. In a preferable embodiment, first beam displacer/combiner 1902 is a birefringent crystal. In a more preferable embodiment, first beam displacer/combiner 1902 comprises Yttrium Orthovanadate, calcite, rutile or a-BBO (barium borate). First reciprocal rotators 2502A-B comprise reciprocal polarization rotators, such as half-wave plates, and are optically coupled distally from first beam displacer/combiner 1902. Reciprocal rotators may be made from crystal quartz, calcite, or other conventional birefringent materials. First nonreciprocal rotator 2504 is optically coupled distally to first reciprocal rotators 2502A-B, and can be made from materials including, but not limited to, the nonreciprocal rotating materials discussed above.

Optically coupled distally to first end portion 2520 is center portion 2530. Included in center portion 2530 is first imagine element 1600. First imaging element 1600 is optically coupled distally to first nonreciprocal rotator 2504. Beam angle turner 1508, 1512 is optically coupled to first imaging element 1600 distally along the horizontal axis. Shown as beam angle turner 1508, 1512 is a conventional Wollaston prism. This is different, for example, from the modified Wollaston prism shown in FIG. 19. In this embodiment, additional waveplates are used to rotate the polarization vectors of the incoming light beams into alignment with the optical axis of a conventional Wollaston prism. Second imaging element 1908 is optically coupled distally to beam angle turner 1508, 1512. Optically coupled distally to center portion 2530 is second end portion 2540, including second nonreciprocal rotator 2506. Second nonreciprocal rotator 2506 is optically coupled to second imaging element 1908. Second nonreciprocal rotators 1910A-B comprise a non-

reciprocal Faraday polarization rotator, and can be made from materials including, but not limited to, the nonreciprocal rotating materials discussed above. Optically coupled distally to second non-reciprocating rotator 2506 are second reciprocating rotators 2508A-B. Second beam displacer/combiner 1912 is optically coupled distally from second reciprocal rotators 2508A-B and proximally from second optical port 1506.

Each of the imaging elements 1600, 1908 has a common focal point 2552 at the center portion 1518 of the center plane 1510 of the beam angle turner 1508, 1512. The longitudinal axis 1560 passes through the center portion and intersects the center plane at an acute angle. Each imaging element also has a focal point at a corresponding end of the optical circulator. Imaging element 1600 has a focal point 2550 at the focal plane which includes ports 1502-1504. Imaging element 1908 has a focal point 2554 at the focal plane which includes port 1506.

In operation, unpolarized light or randomly polarized light from first optical port 1502 enters first beam displacer/combiner 1902, which acts as a polarization sensitive beam displacement plate. The unpolarized light is decomposed into two rays with orthogonal polarization vectors. Within first beam displacer/combiner 1902, the first ray is an ordinary light ray (O-ray) and the other ray is an extraordinary light ray (E-ray). The E-ray walks off vertically from the O-ray through first beam displacer/combiner 1902, with the result that there is a top and bottom ray. The rays then enter first reciprocal rotators 2502A-B. In a preferable embodiment, first reciprocal rotator 2502A rotates by 45 degrees clockwise a ray of light passing through it from first optical port 1502 to second optical port 1506. In another preferable embodiment, first reciprocal rotator 2502B rotates by 45 degrees counterclockwise a ray of light passing through it from first optical port 1502 to second optical port 1506. In another preferred embodiment, the relative directions of rotation imparted by first reciprocal rotator 2502A and second reciprocal rotator 2508A, and by first reciprocal rotator 2502B and second reciprocal rotator 2508B, may be respectively reversed. Upon exiting first reciprocal rotators 2502A-B, both rays have the same polarization orientation. In passing through first nonreciprocal rotator 2504, both rays are rotated by 45 degrees clockwise.

First imaging element 1600 serves to bend distally propagating light to intersect center portion 1518 and to collimate that light. Additionally, the first imaging element bends proximally propagating light to a path parallel to the longitudinal axis 1560 and to focus that light on either of ports 1502-1504. The first imaging element may comprise one or more collimating lenses and prisms in series to collimate and bend the light. Both distally propagating rays enter the center portion of the beam angle turners 1508, 1512 where they are bent in a polarization dependent manner. The rays exit the beam angle turner where they may experience additional bending and transit through second imaging element 1908. Second imaging element bends proximally propagating light to intersect center portion 1518 and to collimate that light. Additionally, the second imaging element bends distally propagating light to a path parallel to the longitudinal axis 1560 and focuses that light on port 1506. The second imaging element may comprise one or more collimating lenses and prisms in series to collimate and bend the light.

The distally propagating rays then enter second nonreciprocal rotator 2506, and are rotated by 45 degrees clockwise. Following second nonreciprocal rotator 2506, the rays enter second reciprocal rotators 2508A-B. In a preferable embodiment, second reciprocal rotator 2508A rotates by 45 degrees clockwise a ray of light passing through it from first optical port 1502 to second optical port 1506. In another preferable embodiment, second reciprocal rotator 2508B rotates by 45 degrees counter-clockwise a ray of light passing through it from first optical port 1502 to second optical port 1506. The rays then pass through second beam displacer/combiner 1912, where the beams are recombined. The recombined light beam then passes through second optical port 1506. Unpolarized light entering second optical port 1506 will travel in the opposite direction. Second nonreciprocal rotator 2506 will direct light along a different optical path towards third optical port 1504. This creates optical circulation.

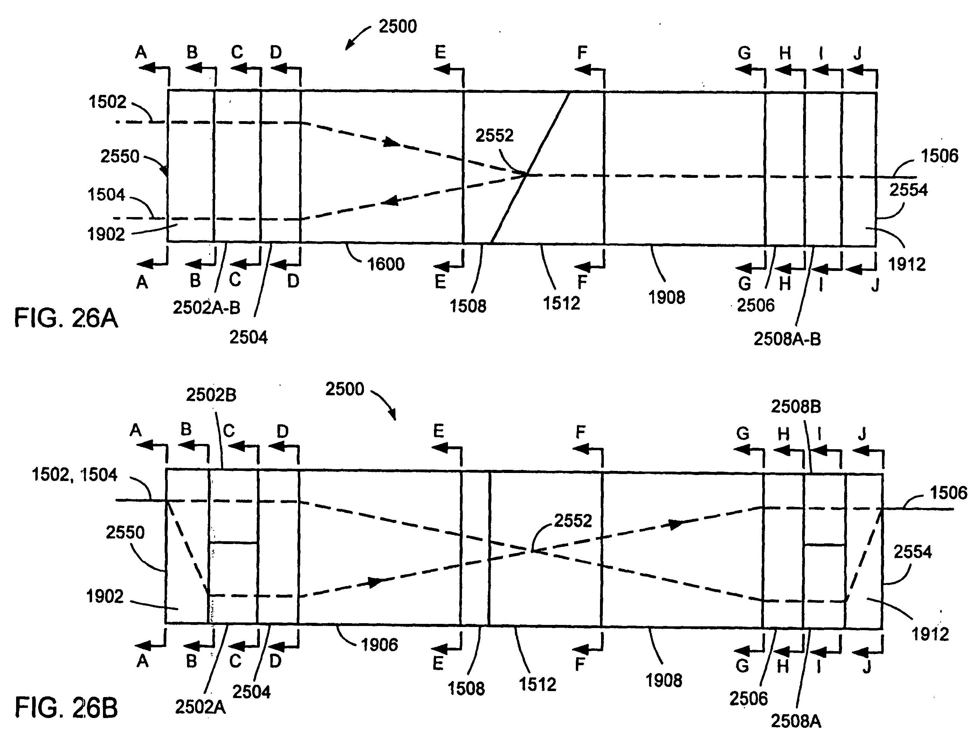

FIGS. 26A-B show top and side isometric views of optical circulator 2500. FIG. 26A shows a top isometric view of optical circulator 2500, together with an internal ray trace, showing directions of the light rays within the circulator. FIG. 26B shows a side isometric view of optical circulator 2500, together with an internal ray trace, showing directions of the light rays within the circulator.

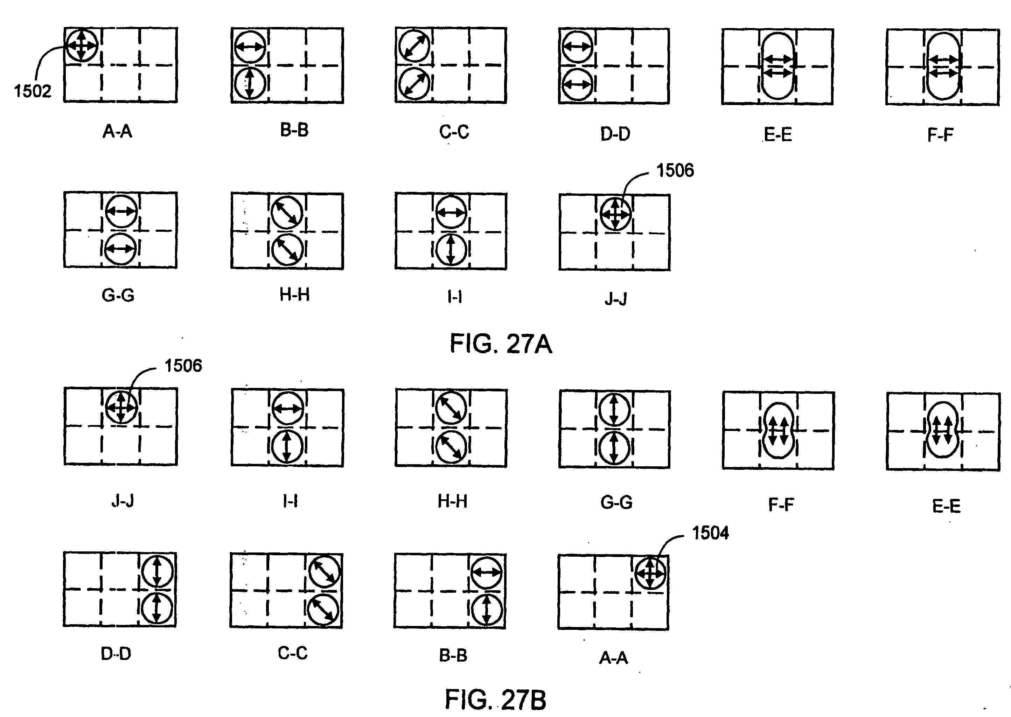

The operation of optical circulator 2500 is illustrated in the cross sectional schematic representations shown in FIGS. 27A-B. FIG. 27A shows how a beam of light entering at first optical port 1502 is manipulated so as to arrive at second optical port 1506. Cross section A-A, shows the beam entering the first beam displacer/combiner 1902. At cross-section B-B, upon exiting first beam displacer/combiner 1902, a ray with a vertical polarization vector is shown as being walked off vertically downward from a top ray with a horizontal polarization vector, thus creating a top and bottom ray. At cross-section C-C, upon exiting first reciprocal rotators 2502A-B, the polarization of the top ray is shown as being rotated 45 degrees counter-clockwise while the bottom ray is shown as being rotated 45 degrees clockwise. At cross-section D-D, upon exiting first nonreciprocal rotator 2504, the polarization of both the rays is shown as being rotated by 45 degrees clockwise. At cross-section E-E, after exiting first imaging element 1600, the rays exhibit the same polarization orientation, but their propagation direction and spatial location within the cross-section have changed. At cross-section F-F, upon exiting the beam angle turner, both of the rays are unchanged in polarization orientation, but have changed their spatial location to nearly overlap. At cross-section G-G, upon exiting second imaging element 1908, the rays have been spatially separated. At cross-section H-H, upon exiting second nonreciprocal rotator 2506, the polarization of both the top and bottom rays have been rotated by 45 degrees clockwise. At cross-section I-I, the top ray is shown as being rotated 45 degrees counter-clockwise while the bottom ray is shown as being rotated 45 degrees clockwise. At cross-section J-J, upon exiting second beam displacer/combiner 1912, the two rays are recombined to exit at second optical port 1506.

FIG. 27B shows how the beam of light entering at second optical port 1506 is manipulated so as to arrive at third optical port 1504. Cross section J-J shows the beam entering the second beam displacer/combiner 1912. At cross-section I-I, a ray with a vertical polarization vector is shown as being walked off vertically downward from a top ray with a horizontal polarization vector, thus creating a top and bottom ray. At cross-section H-H, the polarization vector of the top ray is shown as being rotated 45 degrees clockwise while the bottom ray is shown as being rotated 45 degrees counter-clockwise. Both polarized rays traveling from second optical port 1506 to third optical port 1504 are now in the same polarization orientation. At cross-section G-G, both of the rays are shown as being rotated by 45 degrees clockwise. At cross-section F-F, both of the rays are unchanged in polarization orientation but their propagation directions and spatial locations within the cross-section have been changed. Additionally, the beam path of the polarized rays traveling from second optical port 1506 to third optical port 1504 is different from that of the rays traveling from first optical port 1502 to second optical port 1506 because the polarization vectors of the two sets of rays are perpendicular to each other as they travel through beam angle turner 1508, 1512. At cross-section E-E, upon exiting beam angle turner 1508, 1512, the rays' polarization orientation remains the same, but the propagation directions of the rays is changed from the directions they possessed at cross-section F-F. At cross-section D-D, upon exiting first imaging element 1600, both of the rays are unchanged in polarization orientation but their propagation directions and spatial locations within the cross-section have been changed. At cross-section C-C, the polarization of both the top and bottom rays is shown as being rotated by 45 degrees counter-clockwise. At cross-section B-B, the top ray is shown as being rotated 45 degrees counter-clockwise while the bottom ray is shown as being rotated 45 degrees clockwise. At cross-section A-A, the two rays are recombined to exit at third optical port.

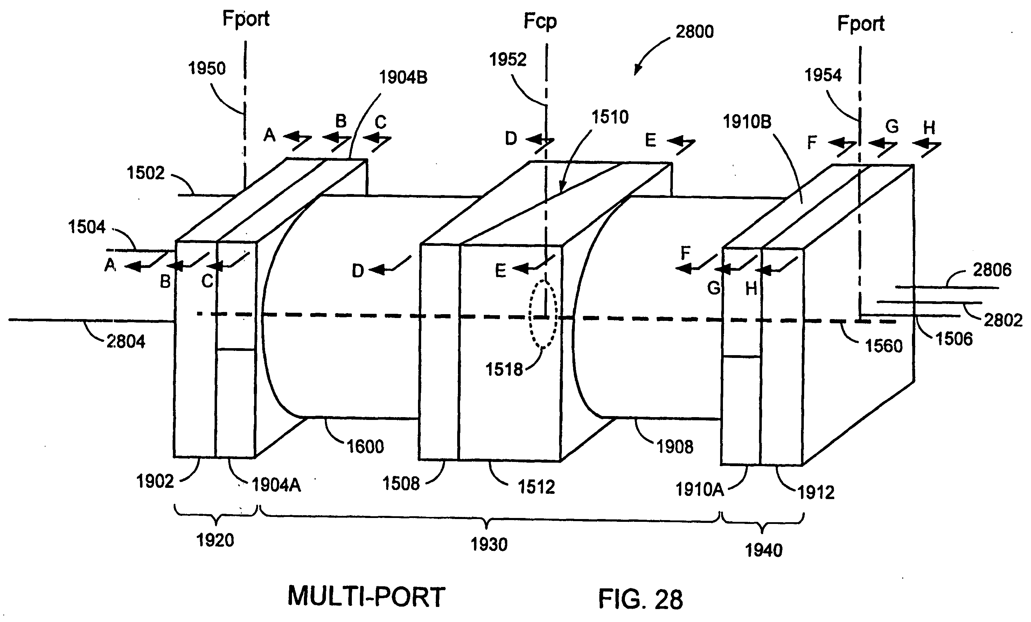

FIG. 28 shows a side isometric view of optical circulator 2800 in a multiple port configuration. Optical circulator 2800 has the same components, structure and operation as optical circulator 1900 as depicted in FIG. 19 except with respect to the optical ports. Optical circulator 2800 depicts fourth optical port 2802, fifth optical port 2804, and sixth optical port 2806. This is in contrast to the circulator embodiment shown in FIG. 19, wherein only three optical ports were depicted. Thus, it is possible to expand from a three port device into a multiple port device simply by providing two arrays of fibers on each side with equal spacing between the optical ports in each array. The inter-array spacing is determined by the focal length of the imaging element and the amount of angle turning of the angle turner. Because of the collimating and focusing capability of the imaging elements multi-port embodiments can be implemented with a compact rectangular form factor. A low cost, compact, multi-port circulator, such as circulators according to the invention, is desirable in many applications where size and price are critical. Further, optical elements may be inserted between the optical ports to achieve desirable functions such as dispersion compensation, add/drop and wavelength multiplexing and demultiplexing.

In operation, optical circulator 2800 functions identically to optical circulator 1900, except with respect to unpolarized light entering third optical port 1504, fourth optical port 2802 and fifth optical port 2804. In optical circulator 2800, unpolarized light is permitted to enter into third optical port 1504, and is received at fourth optical port 2802. Unpolarized light introduced at fourth optical port 2802 is received at fifth optical port 2804. Unpolarized light introduced at fifth optical port 2804 is received at sixth optical port 2806. In similar fashion, more optical ports may be added to inventive optical circulator 2800.

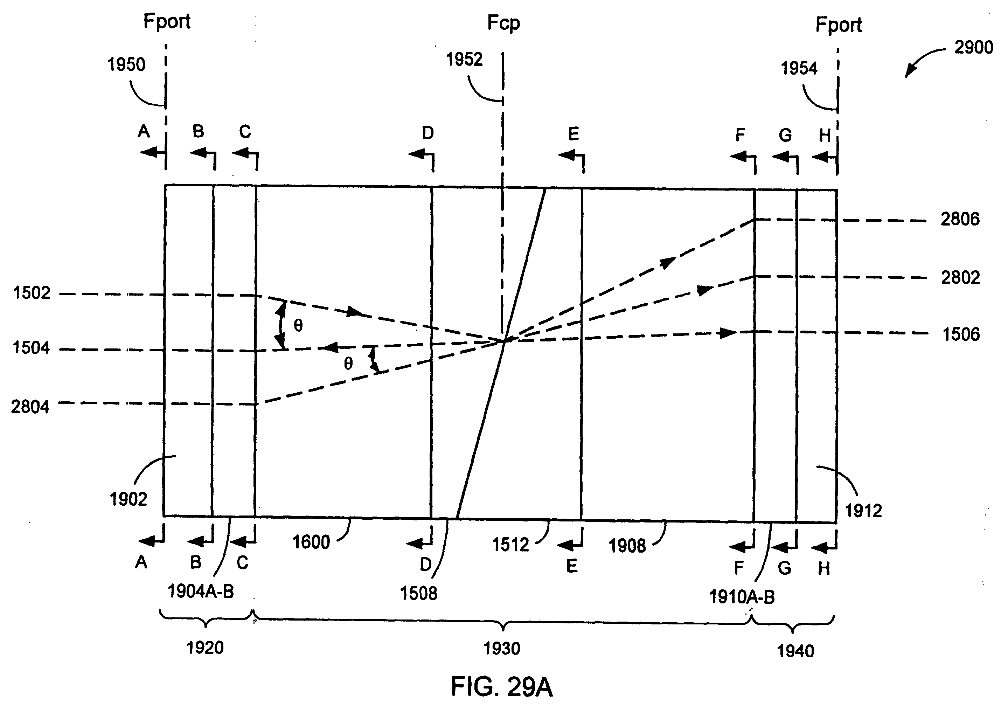

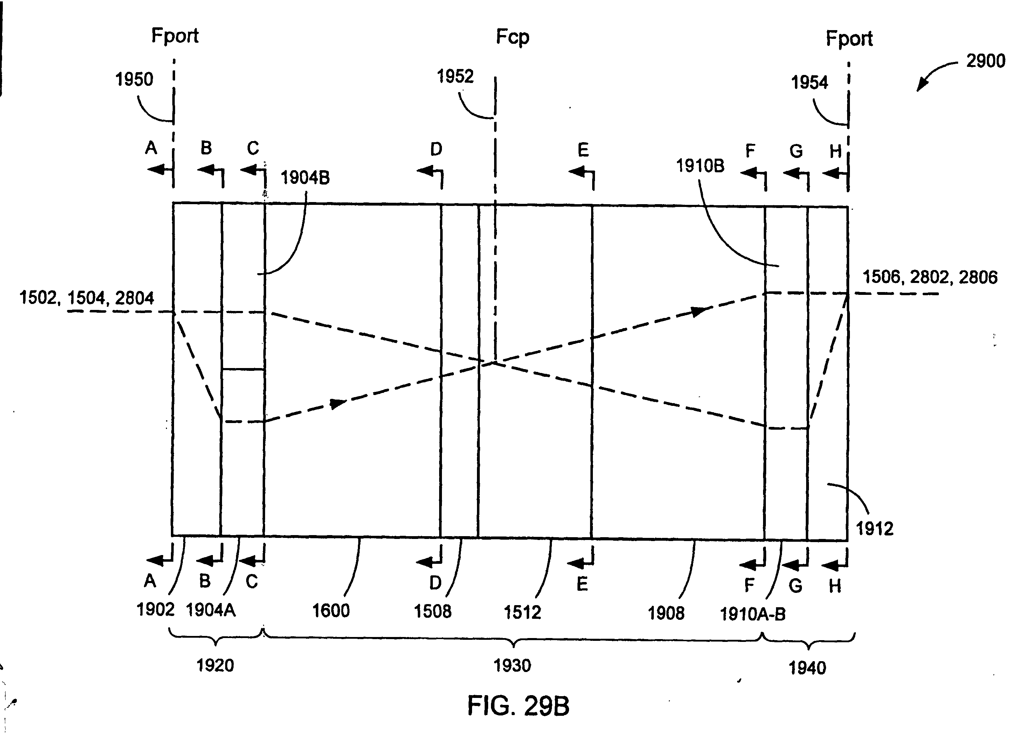

FIGS. 29A-B show top and side isometric views of optical circulator 2900. FIG. 29A shows a top isometric view of optical circulator 2900, together with an internal ray trace, showing directions of the light rays within the circulator. FIG. 29B shows a side isometric view of optical circulator 2900, together with an internal ray trace, showing directions of the light rays within the circulator. Optical circulator 2900 as depicted in FIGS 29A-B has the same components, structure and operation as optical circulator 2800 as depicted in FIG 28.

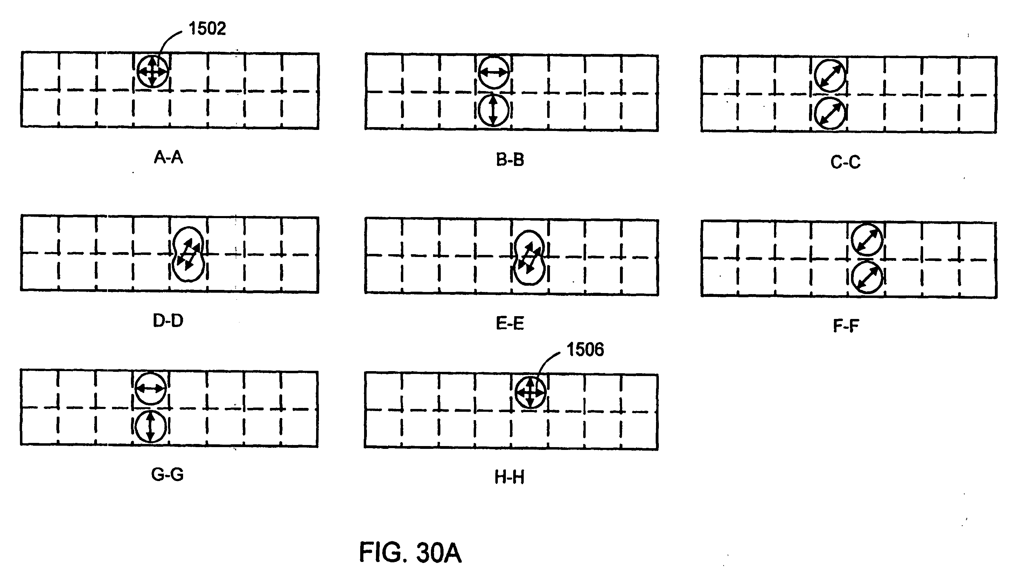

The operation of optical circulator 2800 is illustrated in the cross sectional schematic representations shown in FIGS. 30A-E. FIG. 30A shows how a beam of light entering at first optical port 1502 is manipulated so as to arrive at second optical port 1506. At cross section A-A the beam is shown entering the first beam displacer/combiner 1902. At cross-section B-B, upon exiting first beam displacer/combiner 1902, a ray with a vertical polarization vector is shown as being walked off vertically downward from a top ray with a horizontal polarization vector, thus creating a top and bottom ray. In cross-section C-C, upon exiting first nonreciprocal rotators 1904A-B, the polarization of the top ray is shown as being rotated 45 degrees counter-clockwise while the bottom ray is shown as being rotated 45 degrees clockwise. First imaging element 1600 collimates the polarized rays and bend them to paths which intersect in the center portion 1518 of the beam angle turner 1508, 1512. At cross-section D-D, upon entering the beam angle turner, both of the rays are unchanged in polarization orientation, but have changed their spatial location. At cross-section E-E, upon exiting beam angle turner 1508, 1512, the propagation directions of the rays is changed from the directions that the rays possessed at cross-section D-D. At cross-section F-F, after passing through second imaging element 1908, the rays have been spatially separated. At cross-section G-G, upon exiting second nonreciprocal rotators 1910A-B, the polarization of the top ray is shown as being rotated 45 degrees clockwise while the bottom ray is shown as being rotated 45 degrees counter-clockwise. At cross-section H-H, upon exiting second beam displacer/combiner 1912, the two rays are recombined to exit at second optical port 1506.

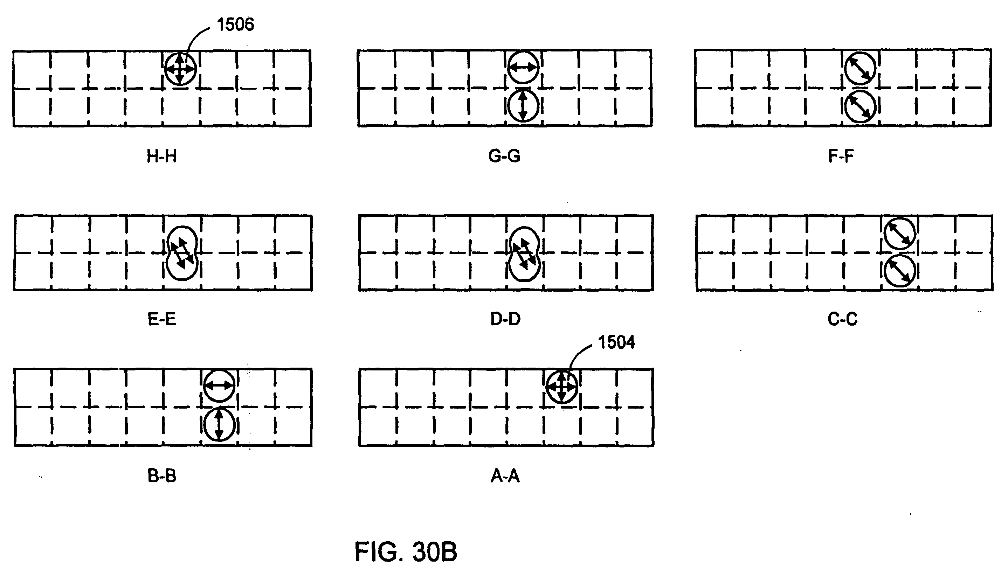

FIG. 30B shows how a beam of light entering at second optical port 1506 is manipulated so as to arrive at third optical port 1504. Cross section H-H shows the beam entering the second beam displacer/combiner 1912. At cross-section G-G, a ray with a vertical polarization vector is shown as being walked off vertically downward from a top ray with a horizontal polarization vector, thus creating a top and bottom ray. At cross-section F-F, the polarization of the top ray is shown as being rotated 45 degrees clockwise while the bottom ray is shown as being rotated 45 degrees counter-clockwise. Both polarized rays traveling from second optical port 1506 to third optical port 1504 are now in the same polarization orientation. The polarization vectors of the proximally propagating rays are perpendicular to the polarization vectors of the distally propagating rays from first optical port 1502 to second optical port 1506. The orthogonal polarization orientation is due to the non-reciprocity of second nonreciprocal rotators 1910A-B. At cross-section E-E, both of the rays are unchanged in polarization orientation but their propagation directions and spatial locations within the cross-section have been changed. Additionally, the beam path of the polarized rays traveling from second optical port 1506 to third optical port 1504 is different from the polarized rays traveling from first optical port 1502 to second optical port 1506 because the polarization orientations of the two sets of rays are perpendicular to each other as they travel through beam angle turner 1508, 1512. At cross-section D-D, upon exiting beam angle turner 1508, 1512, the propagation directions of the rays is changed from the directions that the rays possessed at cross-section D-D. At cross-section C-C, both of the rays are unchanged in polarization orientation but their propagation directions and spatial locations within the cross-section have been changed. At cross-section B-B, the polarization of the top ray is shown as being rotated 45 degrees clockwise while the bottom ray is shown as being rotated 45 degrees counter-clockwise. At cross-section A-A, the two rays are recombined to exit at third optical port 1504.

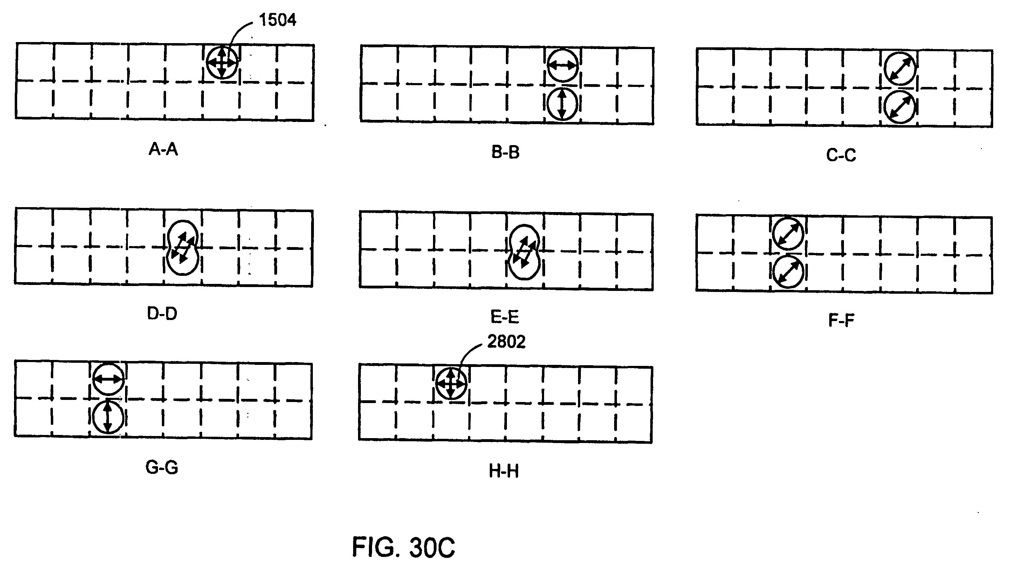

FIG. 30C shows how the light beam entering at third optical port 1504 is manipulated so as to arrive at fourth optical port 2802. Cross section A-A shows the beam entering the first beam displacer/combiner 1902. At cross-section B-B, upon exiting first beam displacer/combiner 1902, a ray with a vertical polarization vector is walked off vertically downward from a top ray with a horizontal polarization vector, thus creating a top and bottom ray. At cross-section C-C, upon exiting first nonreciprocal rotators 1904A-B, the polarization of the top rays is shown as being rotated 45 degrees counter-clockwise while the bottom ray is shown as being rotated 45 degrees clockwise. At cross-section D-D, upon entering the beam angle turner, both of the rays are unchanged in polarization orientation, but have changed their spatial location. At cross-section E-E, upon exiting beam angle turner 1508, 1512, the propagation directions of the rays is changed from the directions that the rays possessed at cross-section D-D. At cross-section F-F, after passing through second imaging element 1908, the rays have been spatially separated and their location has been changed. At cross-section G-G, upon exiting second nonreciprocal rotators 1910A-B, the polarization of the top ray is shown as being rotated 45 degrees clockwise while the bottom ray is shown as being rotated 45 degrees counter-clockwise. At cross-section H-H, upon exiting second beam displacer/combiner 1912, the two rays are recombined to exit at fourth optical port 2802.

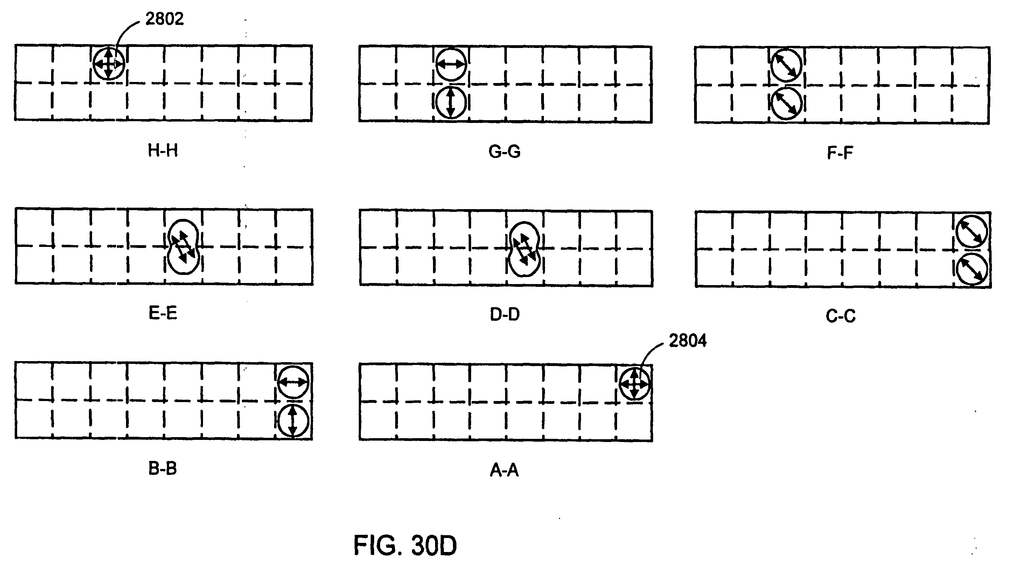

FIG. 30D shows how a beam of light entering at fourth optical port 2802 are manipulated so as to arrive at fifth optical port 2804. Cross section H-H shows the beam entering the second beam displacer/combiner 1912. At cross-section G-G, a ray with a vertical polarization vector is shown as being walked off vertically downward from a top ray with a horizontal polarization vector, thus creating a top and bottom ray. At cross-section F-F, the polarization of the top ray is shown as being rotated 45 degrees clockwise while the bottom ray is shown as being rotated 45 degrees counter-clockwise. Both polarized rays traveling from at fourth optical port 2802 to fifth optical port 2804 are now in the same polarization orientation. At cross-section E-E, both of the rays are unchanged in polarization orientation but their propagation directions and spatial locations within the cross-section have been changed. At cross-section D-D, upon exiting beam angle turner 1508, 1512, the propagation directions of the rays is changed from the directions that the rays possessed at cross-section D-D. At cross-section C-C, both of the rays are unchanged in polarization orientation but their propagation directions and spatial locations within the cross-section have been changed. At cross-section B-B, the polarization of the top ray is shown as being rotated 45 degrees clockwise while the bottom ray is shown as being rotated 45 degrees counter-clockwise. At cross-section A-A, the two rays are recombined to exit at fifth optical port 2804.

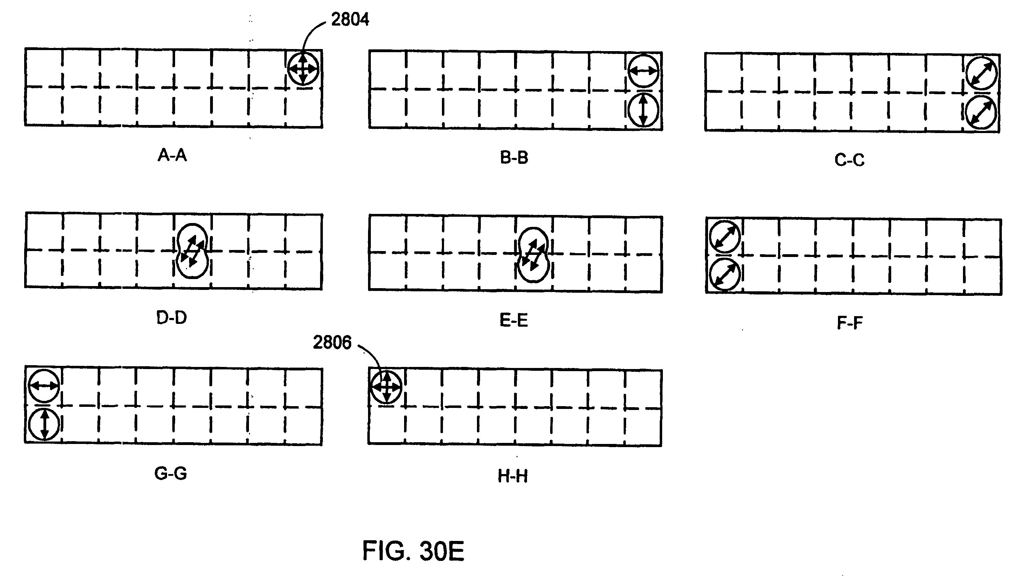

FIG. 30E shows how a beam of unpolarized light entering at fifth optical port 2804 is manipulated so as to arrive at sixth optical port 2806. Cross-section A-A shows the beam entering the first beam displacer/combiner 1902. At cross-section B-B, upon exiting first beam displacer/combiner 1902, a ray with a vertical polarization vector is walked off vertically downward from a top ray with a horizontal polarization vector, thus creating a top and bottom ray. At cross-section C-C, upon exiting first nonreciprocal rotators 1904A-B, the polarization of the top rays is shown as being rotated 45 degrees counter- clockwise while the bottom ray is shown as being rotated 45 degrees clockwise. At cross-section D-D, upon entering the beam angle turner, both of the rays are unchanged in polarization orientation, but have changed their spatial location. At cross-section E-E, upon exiting beam angle turner 1508, 1512, the propagation directions of the rays is changed from the directions that the rays possessed at cross-section D-D. At cross-section F-F, after passing through second imaging element 1908, the rays have been spatially separated. At cross-section G-G, upon exiting second nonreciprocal rotators 1910A-B, the polarization of the top ray is shown as being rotated 45 degrees clockwise while the bottom ray is shown as being rotated 45 degrees counter-clockwise. At cross-section H-H, upon exiting second beam displacer/combiner 1912, the two rays are recombined to exit at sixth optical port 2806.

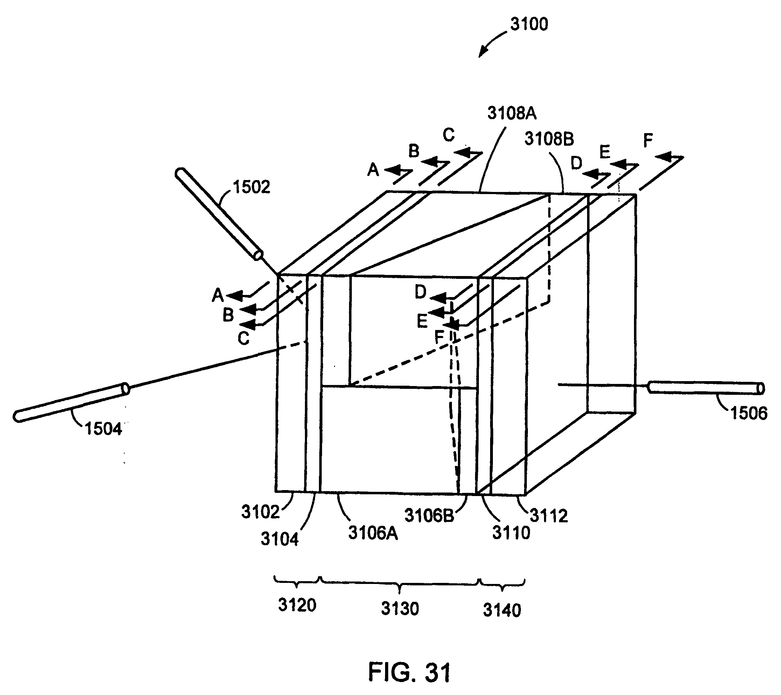

Fig. 31 shows a side isometric view of an embodiment of an alternative optical circulator outside the scope of the appended claims, with dual beam benders and a pair of non-reciprocal rotators. Shown is optical circulator 3100, including first optical port 1502, third optical port 1504, second optical port 1506, first end portion 3120, center portion 3130, and second end portion 3140. First end portion 3120 includes first beam displacer/combiner 3102 and first nonreciprocal rotator 3104. Center portion 3130 includes first beam angle turner 3106A-B, and second beam angle turner 3108A-B. Second end portion 3140 includes second nonreciprocal rotator 3110, and second beam displacer/combiner 3112.

First end portion 3120 is optically coupled distally to the first and third optical ports, and is located in an opposing relationship to second end portion 3140. First beam displacer/combiner 3102 is optically coupled distally to the first and third optical ports 1502 and 1504. In a preferable embodiment, first beam displacer/combiner 3102 is a birefringent crystal. First nonreciprocal rotator 3104 comprises a nonreciprocal Faraday polarization rotator and is optically coupled distally from first beam displacer/combiner 3102.

Optically coupled distally to first end portion 3120 is center portion 3130. Included within center portion 3130 are first beam angle turner 3106A-B and second beam angle turner 3109A-B. First beam angle turner 3106A-B and second beam angle turner 3108A-B are optically coupled to first nonreciprocal rotator 3104 distally along the horizontal axis and are optically coupled to one another.

Optically coupled distally to center portion 1930, second nonreciprocal rotator 3110 is optically coupled to first beam angle turner 3106A-B and second beam angle turner 3108A-B. Second nonreciprocal rotator 3110 comprises a nonreciprocal Faraday polarizanon rotator. Second beam displacer/combiner 3112 is optically coupled distally from second nonreciprocal rotator 3110 and proximally from second optical port 1506.

In operation, unpolarized light from first optical port 1502 enters first beam displacer/combiner 3102, which acts as a polarization sensitive beam displacement plate. The unpolarized light is decomposed into two orthogonal polarization vectors. Within first beam displacer/combiner 3102, the first ray is an ordinary light ray (O-ray) and the other ray is an extraordinary light ray (E-ray). The E-ray walks off vertically from the O-ray through first beam displacer/combiner 3102, with the result that there is a top and bottom ray.

The rays then enter first nonreciprocal rotator 3104. In a preferable embodiment, first nonreciprocal rotator 3104 rotates by 45 degrees counter-clockwise both rays of light passing through it from first optical port 1502 to second optical port 1506. In another preferred embodiment, the relative directions of rotation imparted by first nonreciprocal rotator 3104 and second nonreciprocal rotator 3110 may be respectively reversed.

Upon exiting first nonreciprocal rotator 3104, both rays may have orthogonal polarization orientations before entering first beam angle turner 3106A-B and second beam angle turner 3108A-B. First beam angle turner 3106A-B and second beam angle turner 3108A-B bends both rays in a polarization dependent manner. The rays then exit first beam angle turner 3106A-B and second beam angle turner 3108A-B and transit through second nonreciprocal rotator 3110. In a preferable embodiment, second nonreciprocal rotator 3110 rotates by 45 degrees counterclockwise both rays of polarized light passing through it from first optical port 1502 to second optical port 1506. The rays then pass through second beam displacer/combiner 3112, where the beams are recombined. The recombined light beam then passes through second optical port 1506. Unpolarized light entering second optical port 1506 will travel in the opposite direction. Second nonreciprocal rotator 3110 will direct light along a different optical path towards third optical port 1504. This creates optical circulation. The advantage of this embodiment is that only one nonreciprocal rotator instead of a split pair on each side is used.

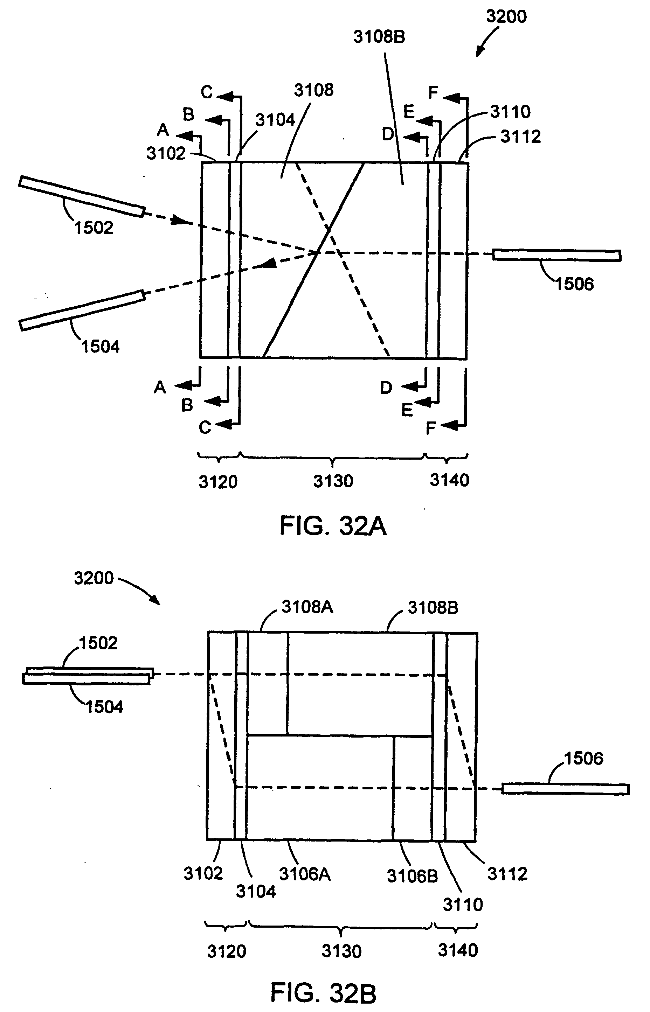

FIGS. 32A-B show top and side isometric views of optical circulator 3200. FIG. 32A shows a top isometric view of optical circulator 3200, together with an internal ray trace, showing directions of the light rays within the circulator. FIG. 32B shows a side isometric view of optical circulator 3200, together with an internal ray trace, showing directions of the light rays within the circulator. Optical circulator 3200 as depicted in FIGS 32A-B has the same components, structure and operation as optical circulator 3100 as depicted in FIG. 31.

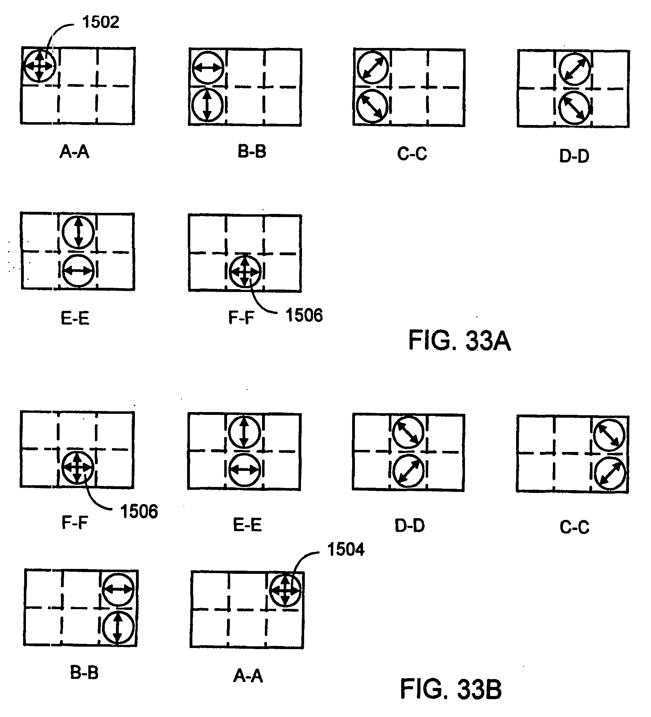

The operation of optical circulator 3100 is illustrated in the cross sectional schematic representations shown in FIGS. 33A-B. FIG. 33A shows how a beam of unpolarized light entering at first optical port 1502 is manipulated so as to arrive at second optical port 1506. Cross section A-A shows the beam entering the first beam displacer/combiner 1902. At cross-section B-B, upon exiting first beam displacer/combiner 1902, a bottom ray with a vertical polarization vector is shown as being walked off vertically from a top ray with a horizontal polarization vector. At cross-section C-C, upon exiting first nonreciprocal rotator 3104, the polarization of both the top and bottom rays is shown as being rotated 45 degrees counter- clockwise. At cross-section D-D, upon exiting the first beam angle turner 3106A-B and second beam angle turner 3108A-B, both of the rays are unchanged in polarization orientation, but have changed their spatial location and propagation direction. At cross-section E-E, upon exiting second nonreciprocal rotator 3110, the polarization of the top and bottom rays is shown as being rotated 45 degrees counter-clockwise. At cross-section F-F, upon exiting second beam displacer/combiner 3112, the two rays are recombined to exit at second optical port 1506.

FIG. 33B shows how a beam of light entering at second optical port 1506 is manipulated so as to arrive at third optical port 1504. Cross-section F-F shows the beam entering the second beam displacer/combiner 3112. At cross-section E-E, a ray with a vertical polarization vector is shown as being walked off vertically downward from a top ray with a horizontal polarization vector, thus creating a top and bottom ray. At cross-section D-D, the polarization of both the top and bottom rays is shown as being rotated 45 degrees counter-clockwise. Both polarized rays traveling from second optical port 1506 to third optical port 1504 are now in an orthogonal polarization orientation. The rays are also perpendicular to the polarization rays traveling from first optical port 1502 to second optical port 1506. The orthogonal polarization orientation is due to the non-reciprocity of second nonreciprocal rotator 3110. At cross-section C-C, both of the rays are unchanged in polarization orientation but their propagation directions and spatial locations within the cross-section have been changed. Additionally, the beam path of the polarization rays traveling from second optical port 1506 to third optical port 1504 is different from the polarization rays traveling from first optical port 1502 to second optical port 1506 because the polarization orientations of the two sets of rays are perpendicular to each other as they travel through first beam angle turner 3106A-B and second beam angle turner 3108A-B. At cross-section B-B, upon exiting first nonreciprocal rotator 3104, the polarization of both the top and bottom ray is shown as being rotated 45 degrees counter-clockwise. At cross-section A-A, the two rays are recombined to exit at third optical port 1504.

It will be apparent to those skilled in the art that various modifications and variations can be made in the circulators, systems and methods of the present invention without departing from the scope of the invention. Thus, it is intended that the present invention cover the modifications and variations of this invention provided they come within the scope of the appended claims and their equivalents.

**Claims**

1. An optical circulator having a longitudinal axis comprising along said axis:

   a first beam displacer/combiner that displaces at least one optical beam propagating in a forward direction into two polarized component beams and combines at least two polarized component beams propagating in a backward direction to form an optical beam;
   a first nonreciprocal rotator, optically coupled to the first beam displacer/combiner distally along the longitudinal axis, for rotating the polarization orientation of the polarized component beams;
   a first beam angle turner, optically coupled to the first nonreciprocal rotator distally along the longitudinal axis, for turning the polarized component beams through an angle, wherein the path of the polarized beam converges to or diverges from the longitudinal axis of the circulator depending upon the polarization and propagation direction of the polarized component beam;
   a second beam angle turner, optically coupled to the first beam angle turner distally along the longitudinal axis, for turning the polarized component beams through an angle, wherein the path of the polarized beam converges to or diverges from the longitudinal axis of the circulator depending upon the polarization and propagation direction of the polarized component beam;
   a second nonreciprocal rotator, optically coupled to the second beam angle turner distally along the longitudinal axis, for rotating the polarization orientation of the polarized component beams; and
   a second beam displacer/combiner, optically coupled to the second nonreciprocal rotator distally along the longitudinal axis, that displaces at least one optical beam propagating in a backward direction into two polarized component beams and combines at least two polarized component beams propagating in a forward direction to form an optical beam;

   wherein the first and second beam angle turners are separated by a complete gap along the longitudinal axis of the optical circulator, which defines a forward and backward beam separation.

2. The optical circulator according to claim 1, further comprising at least one imaging element, optically coupled to the first beam displacer/combiner proximally along the longitudinal axis, for turning two or more adjacently spaced optical beams in a convergent or divergent propagation direction with respect to the longitudinal axis of the circulator.

3. The optical circulator according to claim 1, further comprising at least one imaging element, optically coupled to the second beam displacer/combiner distally along the longitudinal axis, for coupling light into or collimating light from the second beam displacer/combiner.

4. The optical circulator of claim 1, wherein the first and second beam displacer/combiners comprise birefringent crystal plates.

5. The optical circulator of claim 1, further comprising three or more optical ports distributed such that at least two optical ports are optically coupled to the first beam displacer/combiner proximally along the longitudinal axis, and one optical port is optically coupled to the second beam displacer/combiner distally along the longitudinal axis.

6. The optical circulator of claim 5, comprising 4 or more optical ports.

7. The optical circulator of claim 1, wherein the first or second beam angle turners comprise Rochon, Wollaston, or modified Rochon or Wollaston prisms or a pair of birefringent wedges separated by a complete gap.

8. The optical circulator of claim 7, wherein the each of the first or second beam angle turners comprise two or more Rochon, Wollaston, or modified Rochon or Wollaston prisms or a pair of birefringent wedges separated by a complete gap.

9. The optical circulator of claim 1, wherein
   the complete gap separates portions of the first or second beam angle turners.

10. The optical circulator of claim 1, wherein the first or second nonreciprocal rotators comprise Faraday rotators.

11. The optical circulator of claim 1, wherein the first or second nonreciprocal rotators comprise two or more nonreciprocal rotators, and each of the two or more nonreciprocal rotators rotates a polarization orientation of polarized component beams passing therethrough.

12. The optical circulator of claim 11, wherein each of the two or more nonreciprocal rotators rotates a polarization orientation of polarized component beams passing through to a different polarization orientation with respect to others of the two or more nonreciprocal rotators

13. An optical telecommunications system comprising the optical circulator of anyone of claims 1 to 12.

14. The optical telecommunications system of claim 13, wherein the optical telecommunications system comprises a wavelength division multiplexer, an Erbium-doped fiber amplifier, an add-drop multiplexer, a dispersion compensator, or an optical time domain reflectometer

15. A method of adjusting beam separation of optical beams in an optical circulator as defined in claim 1,
   the method comprising adjusting a length of a complete gap along the longitudinal axis of the circulator and defined by the first and second beam angle turners.

16. A method of circulating an optical signal comprising passing it through an optical pathway wherein the optical pathway comprises at least one circulator according to any one of claims 1 to 12.

**Patentansprüche**

1. Optischer Zirkulator mit Längsachse, der auf der Achse umfasst:

   einen ersten Strahlversetzer/-kombinierer, der wenigstens einen optischen Strahl, der sich in Vorwärtsrichtung ausbreitet, in zwei polarisierte Teilstrahlen versetzt und wenigstens zwei polarisierte Teilstrahlen, die sich in Rückwärtsrichtung ausbreiten, miteinander kombiniert, so dass ein optischer Strahl gebildet wird;
   einen ersten nichtreziproken Rotator, der optisch distal entlang der Längsachse mit dem ersten Strahlversetzer/-kombinierer gekoppelt ist, um die Polarisierungsrichtung der polarisierten Teilstrahlen zu drehen;
   einen ersten Strahlwinkeldreher, der optisch mit dem ersten nichtreziproken Rotator distal entlang der Längsachse gekoppelt ist, um die polarisierten Teilstrahlen um einen Winkel zu drehen, wobei der Weg des polarisierten Strahls in Abhängigkeit von der Polarisierungs- und Ausbreitungsrichtung des polarisierten Teilstrahls zu der Längsachse des Zirkulators konvergiert oder von Selbiger divergiert;

einen zweiten Strahlwinkeldreher, der optisch mit dem ersten Strahlwinkeldreher distal entlang der Längsachse gekoppelt ist, um die polarisierten Teilstrahlen um einen Winkel zu drehen, wobei der Weg des polarisierten Strahls in Abhängigkeit von der Polarisierungs- und Ausbreitungsrichtung des polarisierten Teilstrahls zu der Längsachse des Zirkulators konvergiert oder von Selbiger divergiert;

einen zweiten nichtreziproken Rotator, der optisch mit dem zweiten Strahlwinkeldreher distal entlang der Längsachse gekoppelt ist, um die Polarisierungsrichtung der polarisierten Teilstrahlen zu drehen; und

einen zweiten Strahlversetzer/-kombinierer, der optisch mit dem zweiten nichtreziproken Rotator distal entlang der Längsachse gekoppelt ist, welche wenigstens einen optischen Strahl, der sich in Rückwärtsrichtung ausbreitet, in zwei polarisierte Teilstrahlen versetzt und wenigstens zwei polarisierte Teilstrahlen, die sich in Vorwärtsrichtung ausbreiten, kombiniert, so dass ein optischer Strahl gebildet wird;

wobei der erste und der zweite Strahlwinkeldreher durch einen vollständigen Spalt entlang der Längsachse des optischen Zirkulators voneinander getrennt sind, der die Strahltrennung zwischen Vorwärts- und Rückwärtsrichtung definiert.

2. Optischer Zirkulator nach Anspruch 1, der weiterhin wenigstens ein Bilderzeugungselement umfasst, das optisch mit dem ersten Strahlversetzer/-kombinierer proximal entlang der Längsachse gekoppelt ist, um zwei oder mehr nebeneinander befindliche, beabstandete optische Strahlen in eine konvergierende oder divergierende Ausbreitungsrichtung in Bezug auf die Längsachse des Zirkulators zu drehen.

3. Optischer Zirkulator nach Anspruch 1, der weiterhin wenigstens ein Bilderzeugungselement umfasst, das optisch mit dem zweiten Strahlversetzer/-kombinierer distal entlang der Längsachse gekoppelt ist, um Licht in den zweiten Strahlversetzer/-kombinierer hinein oder aus ihm heraus zu bündeln.

4. Optischer Zirkulator nach Anspruch 1, wobei der erste und der zweite Strahlversetzer/-kombinierer doppelbrechende Kristallplatten umfassen.

5. Optischer Zirkulator nach Anspruch 1, der weiterhin drei oder mehr optische Anschlüsse umfasst, die so verteilt sind, dass wenigstens zwei optische Anschlüsse optisch mit dem ersten Strahlversetzer/-kombinierer proximal entlang der Längsachse gekoppelt sind und ein optischer Anschluss optisch mit dem zweiten Strahlversetzer/-kombinierer distal entlang der Längsachse gekoppelt ist.

6. Optischer Zirkulator nach Anspruch 5, der 4 oder mehr optische Anschlüsse aufweist.

7. Optischer Zirkulator nach Anspruch 1, wobei der erste oder der zweite Strahlwinkeldreher Rochon-, Wollaston- bzw. modifizierte Rochon- oder Wollaston-Prismen oder ein Paar doppelbrechende Keile umfasst, die durch einen vollständigen Spalt voneinander getrennt sind.

8. Optischer Zirkulator nach Anspruch 7, wobei sowohl der erste als auch der zweite Strahlwinkeldreher zwei oder mehr Rochon-, Wollaston- bzw. modifizierte Rochon- oder Wollaston-Prismen oder ein Paar doppelbrechende Keile umfassen, die durch einen vollständigen Spalt voneinander getrennt sind.

9. Optischer Zirkulator nach Anspruch 1, wobei der vollständige Spalt Teile des ersten und zweiten Strahlwinkeldrehers voneinander trennt.

10. Optischer Zirkulator nach Anspruch 1, wobei der erste oder der zweite nichtreziproke Rotator Faraday-Rotatoren umfasst.

11. Optischer Zirkulator nach Anspruch 1, wobei der erste oder der zweite nichtreziproke Rotator zwei oder mehr nicht reziproke Rotatoren umfasst und jeder von den zwei oder mehr nichtreziproken Rotatoren die Polasierungsrichtung ihn durchquerender polarisierter Teilstrahlen dreht.

12. Optischer Zirkulator nach Anspruch 11, wobei jeder von den zwei oder mehr nichtreziproken Rotatoren die Polarisierungsrichtung ihn durchquerender polarisierter Teilstrahlen in eine andere Polarisierungsrichtung als die der anderen zwei oder mehr nichtreziproken Rotatoren dreht.

13. Optisches Telekommunikationssystem, das den optischen Zirkulator nach einem der Ansprüche 1 bis 12 umfasst.

**14.** Optisches Telekommunikationssystem nach Anspruch 13, wobei das optische Telekommunikationssystem einen Wellenlängenmultiplexer, einen Erbium-dotierten Faserverstärker, einen Abzweig-Multiplexer, einen Dispersionskompensator oder ein Rückstreumessgerät umfasst.

**15.** Verfahren zum Einstellen der Strahltrennung optischer Strahlen in einem optischen Zirkulator gemäß Anspruch 1, wobei das Verfahren das Einstellen einer Länge eines vollständigen Spalts entlang der Längsachse des Zirkulators umfasst und durch den ersten und den zweiten Strahlwinkeldreher definiert ist.

**16.** Verfahren zum Zirkulieren eines optischen Signals, welches das Lenken des Signals auf einen optischen Weg umfasst, wobei der optische Weg wenigstens einen Zirkulator nach einem der Anspruche 1 bis 12 umfasst.


**Revendications**

**1.** Circulateur optique ayant un axe longitudinal, comprenant le long dudit axe :

un premier dispositif de déplacement/combinaison de faisceau, qui déplace au moins un faisceau optique se propageant vers l'avant, en deux faisceaux à composants polarisés et combine au moins deux faisceaux à composants polarisés, se propageant vers l'arrière, pour former un faisceau optique ;
un premier dispositif de rotation non réciproque, couplé de manière optique au premier dispositif de déplacement/combinaison de faisceau, de manière distale sur l'axe longitudinal, pour faire tourner l'orientation de polarisation des faisceaux à composants polarisés ;
un premier tourneur d'angle de faisceau, couplé de manière optique au premier dispositif de rotation non réciproque, de manière distale sur l'axe longitudinal, pour faire tourner les faisceaux à composants polarisés d'un angle, où le trajet du faisceau polarisé converge vers ou diverge de l'axe longitudinal du circulateur, en fonction de la polarisation et de la direction de propagation du faisceau à composants polarisés ;
un deuxième tourneur d'angle de faisceau, couplé de manière optique au premier tourneur d'angle de faisceau, de manière distale sur l'axe longitudinal, pour faire tourner les faisceaux à composants polarisés d'un angle, où le trajet du faisceau polarisé converge vers ou diverge de l'axe longitudinal du circulateur, en fonction de la polarisation et de la direction de propagation du faisceau à composants polarisés ;
un deuxième dispositif de rotation non réciproque, couplé de manière optique au deuxième tourneur d'angle de faisceau, de manière distale sur l'axe longitudinal, pour faire tourner l'orientation de polarisation des faisceaux à composants polarisés, et
un deuxième dispositif de déplacement/combinaison de faisceau, couplé de manière optique au deuxième dispositif de rotation non réciproque, de manière distale sur l'axe longitudinal, qui déplace au moins un faisceau optique se propageant vers l'arrière, en deux faisceaux à composants polarisés et combine au moins deux faisceaux à composants polarisés, se propageant vers l'avant, pour former un faisceau optique ;

où les premier et deuxième tourneurs d'angle de faisceau sont séparés par un intervalle complet sur l'axe longitudinal du circulateur optique, qui définit une séparation avant et arrière du faisceau.

**2.** Circulateur optique selon la revendication 1, comprenant en outre au moins un élément d'image, couplé de manière optique au premier dispositif de déplacement/combinaison de faisceau, de manière proximale sur l'axe longitudinal, pour faire tourner deux faisceaux optiques adjacents ou plus, dans une direction convergente ou divergente par rapport à l'axe longitudinal du circulateur.

**3.** Circulateur optique selon la revendication 1, comprenant en outre au moins un élément d'image, couplé de manière optique au deuxième dispositif de déplacement/combinaison de faisceau, de manière distale sur l'axe longitudinal, pour coupler la lumière ou collimater la lumière du deuxième dispositif de déplacement/combinaison de faisceau.

**4.** Circulateur optique selon la revendication 1, dans lequel les premier et deuxième dispositifs de déplacement/combinaison de faisceau comprennent des plaques cristallines biréfringentes.

**5.** Circulateur optique selon la revendication 1, comprenant en outre trois ports optiques ou plus, distribués de sorte qu'au moins deux ports optiques sont couplés de manière optique au premier dispositif de déplacement/combinaison de faisceau, de manière proximale sur l'axe longitudinal, et un port optique est couplé au deuxième dispositif de déplacement/combinaison de faisceau, de manière distale sur l'axe longitudinal.

**6.** Circulateur optique selon la revendication 5, comprenant 4 ports optiques ou plus.

**7.** Circulateur optique selon la revendication 1, dans lequel les premier et deuxième tourneur d'angle de faisceau comprennent des prismes Rochon, Wollaston ou Rochon ou Wollaston modifiés ou une paire de coins biréfringents, séparés par un intervalle complet.

**8.** Circulateur optique selon la revendication 7, dans lequel chaque des premier et deuxième tourneurs d'angle de faisceau comprend deux prismes Rochon, Wollaston ou prismes Rochon ou Wollaston modifiés ou une paire de coins biréfringents, séparés par un intervalle complet.

**9.** Circulateur optique selon la revendication 1, dans lequel l'intervalle complet sépare des parties du premier ou du deuxième tourneur d'angle de faisceau.

**10.** Circulateur optique selon la revendication 1, dans lequel les premier ou deuxième dispositifs de rotation non réciproque comprennent des dispositifs de rotation de Faraday.

**11.** Circulateur optique selon la revendication 1, dans lequel les premier ou deuxième dispositifs de rotation non réciproque comprennent deux dispositifs de rotation non réciproque ou plus, chacun des deux dispositifs de rotation non réciproque ou plus faisant tourner l'orientation de polarisation des faisceaux à composants polarisés passant dans ceux-ci.

**12.** Circulateur optique selon la revendication 11, dans lequel chacun des deux dispositifs de rotation non réciproque ou plus fait tourner l'orientation de polarisation des faisceaux à composants polarisés passant dans ceux-ci, en une orientation de polarisation différente par rapport aux autres des deux dispositifs de rotation non réciproque ou plus.

**13.** Système optique de télécommunication, comprenant le circulateur optique selon l'une quelconque des revendications 1 à 12.

**14.** Système optique de télécommunication selon la revendication 13, où le système optique de télécommunication comprend un multiplexeur de division de longueur d'onde, un amplificateur à fibres dopées à l'erbium, un multiplexeur add-drop, un compensateur de dispersion ou un réflectomètre optique de domaine de temps.

**15.** Procédé d'ajustement de la séparation de faisceau de faisceaux optiques dans un circulateur optique tel que défini à la revendication 1, le procédé comprenant l'ajustement de la longueur d'un intervalle complet sur l'axe longitudinal du circulateur et définie par les premier et deuxième tourneurs d'angle de faisceau.

**16.** Procédé de circulation d'un signal optique, comprenant le passage de celui-ci dans un trajet optique, où le trajet optique comprend au moins un circulateur optique selon l'une quelconque des revendications 1 à 12.

FIG. 1A

FIG. 1B

PRIOR ART

BEAM SHIFTER

EP 1 105 770 B1

200

212A

210

208A

208B

208C

212B

220

252

206

220

TRANSMIT

REFLECT

230

250

222

220

202

222

204

222

208

212

BEAM BENDER

FIG. 2
PRIOR ART

X Y Z

FIG. 3

FIG. 4A

FIG. 4B

FIG.5A

FIG. 5B

FIG. 6

EP 1 105 770 B1

FIG. 7A

FIG. 7B

EP 1 105 770 B1

FIG.8A

FIG. 8B

FIG. 9

FIG. 10A

FIG. 10B

FIG. 11A

FIG. 11B

FIG. 11C

FIG. 12

FIG. 13A

FIG. 13B

A-A  B-B  C-C  D-D

E-E  F-F  G-G  H-H

I-I

## FIG. 14A

I-I  H-H  G-G  F-F

E-E  D-D  C-C  B-B

A-A

## FIG. 14B

FIG. 15

EP 1 105 770 B1

FIG. 16

EP 1 105 770 B1

WOLLASTON PRISM
(MODIFIED)

1500A

1510A

1508B

B

F

A

E

1504

1506

1518

1732

X

Z

Y

D

G

1508A

1512A

H

1502

**FIG. 17A**

A

1508A

1710

B

E

1512A

1712

F

D

**FIG. 17B**

C

H

**FIG. 17C**

G

1508A

1510A

1506

1522

1504

1520

1522

1520

1512A

1502

**FIG. 17D**

ROCHON PRISM
(MODIFIED)

FIG. 18A

FIG. 18B

FIG. 18C

FIG. 18D

FIG. 19

FIG. 20A

FIG. 20B

EP 1 105 770 B1

A-A  B-B  C-C  D-D  E-E  F-F

1502

1506

G-G  H-H

**FIG. 21A**

1506

H·H  G-G  F-F  E-E  D-D  C-C

1504

B-B  A-A

**FIG. 21B**

EP 1 105 770 B1

FIG. 22

FIG. 23A

FIG. 23B

FIG. 24A

FIG. 24B

FIG. 25

FIG. 26A

FIG. 26B

FIG. 27A

FIG. 27B

FIG. 28

MULTI-PORT

Fport
1950

Fcp
1952

Fport
1954

2900

A    B    C                    D              E              F    G    H

2806

1502                                                        2802

θ

1504                                                        1506

θ

2804

1902

1912

A    B    C    1600    D    1512    E    1908    F    G    H

1904A-B    1508    1910A-B

1920    1930    1940

FIG. 29A

EP 1 105 770 B1

FIG. 29B

EP 1 105 770 B1

FIG. 30A

EP 1 105 770 B1

FIG. 30B

FIG. 30C

EP 1 105 770 B1

FIG. 30D

EP 1 105 770 B1

FIG. 30E

FIG. 31

EP 1 105 770 B1

FIG. 32A

FIG. 32B